# EUROPÄISCHE PATENTSCHRIFT

(11) **EP 4 012 233 B1**
(45) Veröffentlichungstag und Bekanntmachung des Hinweises auf die Patenterteilung: **28.10.2026**
(21) Anmeldenummer: 21213498.5
(22) Anmeldetag: 09.12.2021
(51) Int. Cl.: F16J 15/08, F04D 29/00, F16J 15/02, F04C 15/06, F04C 15/00, F04C 2/344, F01C 21/10

(54) **SICKENDICHTUNG**
BEADED GASKET
JOINT D'ÉTANCHÉITÉ DE MOULURE

(30) Priorität: 11.12.2020 DE 102020133200
(43) Veröffentlichungstag der Anmeldung: 15.06.2022
(73) Patentinhaber: Schwäbische Hüttenwerke Automotive GmbH, 73433 Aalen (DE)
(72) Erfinder: Meinig, Uwe, 88348 Bad Saulgau (DE)
(74) Vertreter: SSM Sandmair

(56) Entgegenhaltungen:
- EP-A1- 3 832 175
- ES-U- 121 955
- ES-U- 121 956
- US-A- 4 294 252

## Beschreibung

Die Erfindung betrifft eine Sickendichtung zum Abdichten eines Spalts zwischen einem ersten Bauteil und einem zweiten Bauteil. Ferner betrifft die Erfindung eine Pumpe, wie etwa eine Schmierölpumpe, Kühlmittelpumpe, Vakuumpumpe oder insbesondere eine Getriebepumpe, mit einer Sickendichtung zur Abdichtung eines Fluidauslasses der Pumpe. Die Pumpe kann einflutig oder mehrflutig, insbesondere mehrkreisig sein. Sie kann vorteilhafterweise in Cartridge-Bauweise ausgeführt sein. Die Pumpe kann als Getriebepumpe zur Versorgung eines Getriebes, beispielsweise eines Automatikgetriebes oder Lenkgetriebes eines Fahrzeugs oder einer Windkraftanlage, mit Druckfluid verwendet werden. In einer anderen Verwendung kann sie als Schmierund/oder Kühlmittelpumpe zur Versorgung einer Brennkraftmaschine, beispielsweise eines Antriebsmotors eines Fahrzeugs, mit Schmier- und/oder Kühlmittel, insbesondere Schmieröl, verwendet werden. Eine kombinierte Verwendung als Schmierölpumpe und als Getriebepumpe ist ebenfalls denkbar, insbesondere in Ausgestaltungen, in denen die Pumpe mehrflutig ist. Die Pumpe kann zur Schmierung und/oder Kühlung eines Elektromotors, der beispielsweise einen Antriebsmotor oder Hilfsantriebsmotor eines Kraftfahrzeugs bildet, verwendet werden. Die erfindungsgemäße Sickendichtung kann aber auch zur Abdichtung von Fluidverbindungen, beispielsweise zur Abdichtung eines Spalts zwischen zwei miteinander verbundenen Rohr- oder Leitungsstücken, oder eines Einlasses oder Auslasses eines hydraulischen Motors verwendet werden.

Die EP 3 081 741 A2 offenbart eine Getriebepumpe mit mehreren Arbeitsfluten. Die Pumpe ist als Mehrkreispumpe ausgeführt und weist dementsprechend separate, gegeneinander abgedichtete Druckauslässe auf. Ein erster Druckauslass wird mittels einer ringförmigen Radialdichtung, die ein Gehäuse der Pumpe umgibt, abgedichtet. Innerhalb des mittels der Radialdichtung erhaltenen Druckraums ist eine Auslassdichtung in Form einer Axialdichtung angeordnet, die einen zweiten Druckauslass dichtend umgibt, um den zweiten Druckauslass vom ersten Druckraum zu separieren. Die Pumpe ist in Cartridge-Bauweise ausgeführt und wird mit einer äußeren Stirnseite des Pumpengehäuses voran in einen Aufnahmeschacht einer Aufnahmeeinrichtung eingebaut. Ein von der Pumpe gefördertes Druckfluid wird über die Druckauslässe und diesen axial gegenüberliegende Druckanschlüsse der Aufnahmeeinrichtung abgefördert. Eine Federeinrichtung ist an einem Boden des Aufnahmeschachts abgestützt und drückt mit Federkraft gegen die axial zugewandt gegenüberliegende äußere Stirnseite des Pumpengehäuses, wodurch Fertigungs- und Montagetoleranzen und betriebsbedingte Geometrieänderungen in axialer Richtung ausgeglichen werden können.

Die US 2017/0260979 A1 offenbart eine Dichtungsanordnung für eine Flügelzellenpumpe in Cartridge-Bauweise, wobei die Flügelzellenpumpe zwei Arbeitsfluten aufweist und als Zweikreispumpe ausgeführt ist. Die Dichtungsanordnung umfasst eine um den Umfang des Pumpengehäuses umlaufend angeordnete Radialdichtung, die einen ersten Druckraum der Pumpe vom Saugraum trennt, und eine als Axialddichtung ausgeführte Auslassdichtung, die an einer äußeren Stirnseite des Pumpeneinsatzes angeordnet ist. Die Auslassdichtung trennt den ersten Druckraum von einem zweiten Druckraum der Pumpe und dichtet einen Wellendurchtritt für eine Antriebswelle der Pumpe ab.

Die US 4 294 252 A offenbart eine Kunststoffbefestigung, gemäß der Präambel von Anspruch 1, zum Befestigen eines Sammelbeutels und zum Herstellen einer dichten Verbindung zwischen einem Körper und dem Sammelbeutel für medizinische Anwendungen, beispielsweise zum Halten eines Kolostomiebeutels.

Der Stand der Technik verwendet zur Abdichtung, insbesondere zur Abdichtung des jeweiligen Pumpenauslasses, Weichstoffdichtungen. Werden die Dichtungen als Axialdichtungen eingesetzt, ist es schwierig, die auf Materialelastizität beruhende Dichtwirkung zu gewährleisten. Die Weite des Spalts, der mittels der Axialdichtung abgedichtet wird, kann sich ändern, beispielsweise aufgrund thermisch bedingter Änderungen der Geometrie und/oder druckbedingten Bewegungen des Pumpengehäuses oder von Gehäuseteilen. Die Spaltweite kann auch von Einbaufall zu Einbaufall aufgrund Bauteil- und/oder Einbautoleranzen variieren. Weichstoffdichtungen benötigen hohe und über ihren Umfang gleichmäßige Flächenpressungen, um die erforderliche Abdichtung zu erzielen. Ändert sich die Flächenpressung während des Pumpenbetriebs aufgrund Temperatur- und/oder Druckänderungen oder von Pumpe zu Pumpe aufgrund variierender Toleranzen, kann eine gleichbleibend sichere Dichtwirkung nur mit hohem Aufwand gewährleistet werden. Auch die Standfestigkeit ist ein Problem. Bei Pulsationen, hohen Drücken und großen zu überbrückenden Spaltweiten besteht eine erhöhte Spaltextrusionsgefahr.

Zum Abdichten bei hohen Temperaturen und periodischem Druckwechsel, beispielsweise zum Abdichten von Zylinderköpfen, haben sich Metallsickendichtungen bewährt. Die DE 42 19 709 A1 offenbart hierfür Beispiele.

Abweichend von üblichen Dichtfällen, bei denen die Sickendichtung in einem festen, axial verspannten Verbund eingebaut ist, muss die Auslassdichtung zur Abdichtung eines Druckauslasses beispielsweise einer Cartridge-Pumpe neben der Summe der unter ungünstigen Bedingungen aufsummierten Axialtoleranzen des axialen Verbunds aus Pumpenbauteilen und beispielsweise eines Pumpennests auch die im Betrieb der Pumpe auftretenden Wärmedehnungen der unterschiedlichen Bauteile des Verbunds ausgleichen. Dabei werden die Dichtflächen in typischen Einbaufällen in unkonventioneller Weise durch eine am Nestboden sich abstützende Federeinrichtung, typischerweise eine Vorspann-Tellerfeder, auseinandergedrückt. Die Auslassdichtung muss mit ihren axialen Federeigenschaften daher im Vergleich zu einer Dichtung in einem fest verspannten Verbund, wie etwa eine Zylinderkopfdichtung, deutlich größere Toleranzen in der Spaltweite ausgleichen.

Die Anmelderin hat Sickendichtungen entwickelt, die den beschriebenen Anforderungen hinsichtlich des Ausgleichs verhältnismäßig großer Variationen der Spaltweite gerecht werden. So wird eine vorteilhafte Sickendichtung in der deutschen Patentanmeldung Nr. 10 2019 132 729.6 bzw. in der europäischen Patentanmeldung EP 3 832 175 A1 offenbart, die hinsichtlich der Anordnung und Ausgestaltung der Sickendichtung und insbesondere der Versteifung einer oder mehrerer Sickenschleifen in Bezug genommen wird.

Um zwei oder mehr Dichtungslagen einer Sickendichtung relativ zueinander zu positionieren, so dass die Sickenschleifen der Lagen in einer für den Verwendungsfall ausreichend genauen axialen Flucht liegen, werden die Dichtungslagen bei der Herstellung der Sickendichtung zueinander fixiert. Die Fixierung kann, wie beispielsweise bei Zylinderkopfdichtungen, durch Nieten erfolgen. Voraussetzung für die Nietlösung ist, dass es die konstruktiven Randbedingungen zulassen, die Nieten außerhalb des Bereichs der Sickenschleifen zu positionieren, so dass es beim Einbau und Verspannen der Sickendichtung nicht zum vorzeitigen Anliegen der axial im Vergleich zu den Sickenschleifen erhöhten Nietköpfe kommt. Weiterhin wäre es möglich, eine Verbindung der Dichtungslagen dadurch zu verwirklichen, dass die eine Dichtungslage durch einen Stanz- und Tiefziehprozess mit einer oder mehreren hohlnietenförmigen Ausfalzungen und eine andere der Dichtungslagen mit einer oder mehreren Bohrungen versehen und die Ausfalzungen beim anschließenden Fügen der Dichtungslagen in die entsprechenden Bohrungen gesteckt und vernietet werden. Derartige Nietlösungen haben den zusätzlichen Nachteil, dass die Gefahr von Materialbruch im Bereich der Ausfalzungen aufgrund hoher Umformungsgrade des meist verwendeten, nur begrenzt plastisch verformbaren Federstahls besteht. Bekannt ist ferner, eine der Dichtungslagen mit Blechlappen zu versehen, die beim Fügen um einen Umfangsrand einer anderen Dichtungslage umgelegt werden. Nachteil derartiger Falzverbindungen ist, dass das Umlegen der Blechlappen einen verhältnismäßig hohen Umformungsgrad und somit eine starke plastische Verformung erfordert und damit die Gefahr des Abbrechens des jeweiligen Blechlappens mit sich bringt. Zusätzlich wird durch das Umlegen von Blechlappen im Verbindungsbereich eine axiale Bauhöhe erzeugt, die gegenüber den so gefügten Dichtungslagen um die Dicke einer der Dichtungslagen erhöht ist. Bekannt ist auch, die Dichtungslagen durch Schweißen zu fügen. Ein wesentlicher Nachteil des Schweißens ist, dass durch den Schweißprozess wegen der unvermeidlichen Entstehung von Schmelzspritzern und Metalloxiden die Einhaltung der Anforderungen an die technische Sauberkeit der Sickendichtung erschwert wird. Für den Einsatz der Sickendichtung in beispielsweise einer Hochdruckpumpe eines Automatikgetriebes, worauf die Erfindung insbesondere auch abzielt, kommt die mit Schweißverfahren verbundene Restschmutzproblematik einem Ausschlusskriterium gleich. Die genannten Fügeprozesse sind mit erheblichem Aufwand verbunden.

Zur Vermeidung dieser Probleme schlägt die EP 1 389 701 A2 vor, eine Dichtungslage einer Flachdichtung mit Halteelementen und eine andere Dichtungslage der Flachdichtung mit Haltegegenelementen zu versehen, die einander in jeweils einem Halteeingriff hintergreifen. Erwähnt wird die Möglichkeit, mit der mehrlagigen Flachdichtung einen Motorblock und einen Zylinderkopf abzudichten. Eine Sickendichtung wird nicht beschrieben. Das Fügen von Dichtungslagen einer mehrlagigen Flachdichtung durch mehrere Halteelemente und Haltegegenelemente, die einander in jeweils einem Halteeingriff hintergreifen, geht auch aus der DE 198 22 772 A1 hervor, die keine spezielle Verwendung erwähnt und auch keinen Hinweis auf die Ausführung der Flachdichtung als Sickendichtung liefert. Die mehrlagigen Flachdichtungen des Standes der Technik bestehen aus separat gefertigten Dichtungslagen, die mithilfe von mehreren, über die Fläche der jeweiligen Flachdichtung verteilt angeordneten Paaren von Halteelementen und Haltegegenelementen gefügt werden. Die Dichtungslagen müssen vereinzelt und zum Fügen relativ zueinander positioniert und gehalten werden. Das Fügen an sich ist ebenfalls aufwendig, da eine Vielzahl von Halteelementen und Haltegegenelementen jeweils paarweise in den Halteeingriff gebracht werden müssen.

Es ist eine Aufgabe der Erfindung, eine kostengünstige Dichtung für axialen Dichtkontakt zu schaffen, die Bauteil- und/oder Einbautoleranzen und/oder thermisch bedingte Geometrieänderungen und/oder druckbedingte Bewegungen von Bauteilen am Einbauort der Dichtung unter Aufrechterhaltung der erforderlichen Dichtwirkung wirksam und zuverlässig (langlebig) kompensieren kann.

Ein Aspekt ist die einfache Handhabbarkeit. Eine mehrlagige Sickendichtung soll einfach und sicher magaziniert, transportiert, für die Montage vereinzelt und in einer Montageanlage automatisiert prozesssicher montiert werden können.

Ein weiterer Aspekt ist die technische Sauberkeit. Beim Fügen von zwei oder mehr Dichtungslagen soll möglichst wenig Schmutz, vorteilhafterweise keinerlei Schmutz, in die Sickendichtung eingetragen werden.

Eine weitere Aufgabe ist die Bereitstellung einer Pumpe, die für die Anordnung in einem Aufnahmeschacht einer Aufnahmeeinrichtung geeignet ist und für diesen Zweck eine Gehäuse-Stirnwand mit einem oder mehreren Druckauslässen zur Abförderung eines Druckfluids aus einer Förderkammer der Pumpe aufweist. Für eine derartige Pumpe soll die Abdichtung des einen oder der mehreren Druckauslässe in Bezug auf Bauteilund/oder Einbautoleranzen der Aufnahmeeinrichtung und der Pumpe und/oder thermisch bedingten Geometrieänderungen und/oder druckbedingten Bewegungen von Gehäusestrukturen der Pumpe kostengünstig verbessert werden.

Die Erfindung schlägt eine mehrlagige Sickendichtung vor. Die Sickendichtung umfasst eine erste Dichtungslage mit einem Halteelement, eine zweite Dichtungslage mit einem Haltegegenelement und einen oder mehrere Faltabschnitte, der oder die die erste Dichtungslage und die zweite Dichtungslage verbindet oder verbinden. Die Sickendichtung kann eine oder mehrere weitere Dichtungslagen umfassen und beispielsweise drei- oder vierlagig sein. Insbesondere können jedoch die erste Dichtungslage und die zweite Dichtungslage bereits die Sickendichtung als doppellagige Sickendichtung bilden.

Die erste Dichtungslage, die zweite Dichtungslage und der jeweilige Faltabschnitt sind in einem Stück geformt, beispielsweise aus einem Federstahlblech. Die Sickendichtung kann in einem gefalteten Zustand oder in einem aufgefalteten Zustand vorliegen. Im gefalteten oder nur teilweise gefalteten Zustand sind die Dichtungslagen einander in axialer Richtung zugewandt. Im gefalteten Zustand liegen sie übereinander, was auch den Fall einschließt, dass sie über eine Zwischenlage übereinander liegen. Bevorzugt liegen sie im gefalteten Zustand allerdings unmittelbar aufeinander.

Das Halteelement und das Haltegegenelement sind miteinander in einem auf Formund/oder Reibschluss beruhenden Halteeingriff oder sind in diesen Halteeingriff bringbar. Im Halteeingriff sichern sie die Dichtungslagen gegen ein Auseinanderklaffen, wozu es im ungesicherten Zustand beispielsweise aufgrund einer nicht nur plastischen, sondern auch zu einem gewissen, wenn auch geringen Anteil elastischen Verformung des jeweiligen Faltabschnitts und/oder kleinerer Formfehler der typischerweise dünnen Dichtungslagen kommen kann.

In vorteilhaften ersten Ausführungen kommt die Sickendichtung mit einem einzigen Halteeingriff aus, d.h. die relativ zueinander zu sichernden oder gesicherten Dichtungslagen weisen in derartigen Ausführungen jeweils gemeinsam nur ein einziges Halteelement und ein einziges Haltegegenelement auf. In zweiten Ausführungen umfassen die erste Dichtungslage ein weiteres Halteelement und die zweite Dichtungslage ein weiteres Haltegegenelement, die einander in einem weiteren Halteeingriff hintergreifen oder in den weiteren Halteeingriff bringbar sind, um die Dichtungslagen gegen ein Auseinanderklaffen zu sichern. Es soll zwar nicht ausgeschlossen werden, dass die erste Dichtungslage ein oder mehrere weitere Halteelemente und die zweite Dichtungslage ein oder mehrere weitere Haltegegenelements umfassen, die sich jeweils paarweise in einem Halteeingriff befinden oder in den paarweisen Halteeingriff gebracht werden können. In vorteilhaften Ausführungen kommt die Sickendichtung jedoch mit nur einem Paar oder höchstens zwei Paaren von Halte- und Haltegegenelementen aus.

Durch die Fertigung der zwei oder mehr Dichtungslagen in einem Stück in Kombination mit der Faltung und Sicherung im Halteeingriff wird die Sickendichtung in mehrlagiger Ausführung in wenigen Fertigungsschritten erhalten. Es müssen nicht wie im Stand der Technik die Dichtungslagen jeweils einzeln gefertigt, magaziniert, wieder vereinzelt, übereinander bzw. aufeinander positioniert und beim Fügen in Position zueinander gehalten werden. Durch das Falten kann die Präzision der Positionierung der Dichtungslagen relativ zueinander gewährleistet, vorteilhafterweise sogar erhöht werden. Die Anzahl der im Halteeingriff befindlichen Halte- und Haltegegenelemente kann im Vergleich zu einer Sickendichtung aus separat hergestellten Dichtungslagen reduziert werden, da die Dichtungslagen nicht mehr durch mehrere Halte- und Haltegegenelemente relativ zueinander positioniert werden müssen. Die Funktion des einen oder der wenigen Halte- und Haltegegenelemente kann aufgrund der Kombination mit dem Falten auf das Sichern gegen Klaffen reduziert werden.

Das Halteelement und das Haltegegenelement können so geformt und an der jeweiligen Dichtungslage angeordnet sein, dass der Halteeingriff zumindest im Wesentlichen auf Reibschluss beruht oder einen Reibschluss zumindest beinhaltet. So kann der Halteeingriff beispielsweise ein Steckeingriff sein. In derartigen Ausführungen kann eines aus Halteelement und Haltegegenelement in Form eines Durchgangs, beispielsweise einer kreisrunden Bohrung, in der betreffenden Dichtungslage bereitgestellt werden, während das andere als ein nockenartiger oder stiftförmiger axialer Vorsprung der anderen Dichtungslage gebildet ist. Im Halteeingriff steckt der axiale Vorsprung reibschlüssig im Durchgang, wobei der Vorsprung vorteilhafterweise in axialer Richtung so flach ist, dass er im Halteeingriff nicht zur anderen Seite über den Durchgang vorragt.

In vorteilhafteren Ausführungen sind das Halteelement und das Haltegegenelement jedoch so geformt und an der jeweiligen Dichtungslage angeordnet, dass der Halteeingriff zumindest im Wesentlichen auf Formschluss beruht. Das Halteelement und das Haltegegenelement können einander im Halteeingriff in Bezug auf die axiale Richtung insbesondere hintergreifen und mit einer auf elastischer Verformung beruhenden Spannkraft in axialer Richtung gegeneinanderdrücken. Die Spannkraft kann auf elastischer Verformung des einen oder der mehreren Faltabschnitte und/oder auf elastischer Verformung des Halteelements und/oder auf elastische Verformung des Haltegegenelements beruhen. Das Halteelement und das Haltegegenelement können bei der Herstellung des Halteeingriffs zwar grundsätzlich auch plastisch verformt werden. Bevorzugt wird es jedoch, wenn sie nur oder zumindest im Wesentlichen elastisch verformt werden und mit elastischer Spannkraft in axialer Richtung gegeneinanderdrücken, um die Dichtungslagen mit dieser elastischen Spannkraft axial zueinander zu spannen.

Das Halteelement und/oder das Haltegegenelement kann oder können beispielsweise jeweils ein Rastelement und der Halteeingriff dementsprechend ein Rasteingriff sein. Das Halteelement und das Haltegegenelement können in solchen Ausführungen so geformt sein, dass sie bei Herstellung des Halteeingriffs zunächst aneinander abgleiten, wobei das Halteelement und/oder das Haltegegenelement elastisch verformt wird/werden, und das so verformte Halteelement und/oder Haltegegenelement im letzten Teil der Relativbewegung freikommt und in den Halteeingriff schnappt. Vorteilhafter ist es, wenn das Halteelement und/oder das Haltegegenelement bei der Herstellung des Halteeingriffs mittels eines Werkzeugs elastisch verformt und im Zustand der elastischen Verformung gehalten wird oder werden, zweckmäßigerweise mit dem gleichen Werkzeug, bis das Halteelement von der ersten Dichtungslage aus gesehen hinter das Haltegegenelement gelangt ist. Wenn das Halteelement und das Haltegegenelement diese Relativposition erreicht haben, kann das jeweilige, bis dahin elastisch verformte Element entlastet werden, so dass es mit der auf der elastischen Verformung beruhenden Spannkraft gegen das andere Element drückt. Die Dichtungslagen werden in derartigen Ausführungen im Bereich des Halteeingriffs auch dann axial spielfrei gehalten, wenn die Spannkraft nur durch elastische Verformung des Halteelements und/oder des Haltegegenelements erzeugt wird.

Der Halteeingriff kann unlösbar sein. Bevorzugter ist der Halteeingriff jedoch zerstörungsfrei lösbar.

Im Halteeingriff kann das Halteelement einen äußeren Umfangsrand der zweiten Dichtungslage oder das Haltegegenelement einen äußeren Umfangsrand der ersten Dichtungslage in einer Axialebene gesehen hintergreifen. Die Axialebene erstreckt sich in die axiale Richtung und somit zumindest im Wesentlichen orthogonal zu den Dichtungslagen. Der äußere Umfangsrand ist frei in dem Sinne, dass sich die jeweilige Dichtungslage in der Draufsicht gesehen nicht über den freien Umfangsrand hinaus erstreckt. Ein Halteelement oder Haltegegenelement, das sich bis einschließlich zum freien äußeren Umfangsrand der betreffenden Dichtungslage erstreckt, kann sehr einfach hergestellt werden, da sich ein freier äußerer Umfangsrand bei der Herstellung der Sickendichtung von selbst ergibt, beispielsweise bei einem Ausstanzen der Dichtungslagen aus einem Blechnutzen. Das betreffende Halte- oder Haltegegenelement muss nicht eigens geformt werden, sondern fällt bei der Fertigung unvermeidlich als Nebenprodukt an.

Das Halteelement und/oder das Haltegegenelement kann oder können jeweils von einem Wurzelende aus frei vorragen. Das frei vorragende Halteelement und/oder das frei vorragende Haltegegenelement kann oder können vorteilhafterweise elastisch biegbar sein und somit eine Federzunge oder jeweils eine Federzunge bilden. Die Bildung eines der beiden Elemente, beispielsweise des Halteelements, als Federzunge und die Bildung des anderen Elements, beispielsweise des Haltegegenelements, durch einen freien äußeren Umfangsrand und den in der Draufsicht nach innen unmittelbar angrenzenden Randabschnitt ist eine besonders bevorzugte Kombination.

Bei Ausbildung des Halteelements und/oder des Haltegegenelements als Federzunge ist es vorteilhaft, wenn das betreffende Element einen Querschnitt aufweist, der sich vom freien Ende aus gesehen, in Richtung auf das Wurzelende vergrößert, vorzugsweise in axialer Draufsicht auf die betreffende Dichtungslage verbreitert. Die Vergrößerung verläuft bevorzugt kontinuierlich. Die Federzunge hat vorteilhafterweise am Wurzelende ihren größten, beispielsweise in Draufsicht breitesten Querschnitt. In Ausbildungen als auskragende Federzunge kann oder können das Halteelement und/oder das Haltegegenelement in der Draufsicht am Wurzelende mit einem Übergangsradius vorragen.

Das Halteelement und/oder das Haltegegenelement kann oder können jeweils eine Federzunge sein, insbesondere eine Federzunge wie vorstehend beschrieben. In einfachen Ausführungen erstreckt sich die Federzunge in einem lastfreien Zustand von ihrem Wurzelende bis zu ihrem freien Ende durchgehend in der Dichtungslage, die die Federzunge bildet. Ist die Dichtungslage in der unmittelbaren Umgebung der Federzunge wie bevorzugt plan, ist dementsprechend auch die Federzunge plan. In einer Weiterentwicklung erstreckt sich die Federzunge im lastfreien Zustand mit ihrem freien Ende aus der zugehörigen Dichtungslage in Bezug auf die axiale Richtung heraus. Die Federzunge kann abrupt über eine Abknickung oder über eine weich gekrümmte Abbiegung aus ihrer unmittelbaren Umgebung vorragen, so dass ihr freies Ende in seitlicher Ansicht über die unmittelbare Umgebung der Dichtungslage, die die Federzunge bildet, vorragt. Die unmittelbare Umgebung kann wie schon erwähnt insbesondere plan sein. In der Weiterentwicklung erstreckt sich die Federzunge bei einander axial zugewandten Dichtungslagen im unbelasteten Zustand, vor Herstellung des Halteeingriffs, mit ihrem freien Ende aus der die Federzunge bildenden Dichtungslage in eine von der anderen Dichtungslage wegweisende Richtung. Eine derart vorgeformte Federzunge muss in einem höheren Maße als in den einfachen Ausführungen elastisch verformt werden, um den Halteeingriff herzustellen, wodurch sich in der Folge die Spannkraft vergrößert, mit der die Federzunge im Halteeingriff in axialer Richtung wirkt. Dies ist angesichts der typischerweise geringen Dicken der Dichtungslagen vorteilhaft, um einen sicheren Halteeingriff zu gewährleisten.

Das Halteelement und/oder das Haltegegenelement kann oder können jeweils in axialer Richtung rund abgebogen und wieder zurückgebogen oder zweckmäßigerweise gekröpft sein, um die Dicke der Sickendichtung im Bereich des Halteeingriffs gering zu halten. Das abgebogene oder gekröpfte Element erstreckt sich aus der Lagenebene seiner zugehörigen Dichtungslage in die Lagenebene der anderen Dichtungslage. In gekröpfter Ausführung kann es insbesondere treppenförmig mit einem axial oder schräg zur axialen Richtung abfallenden Absatz geformt sein. Die lokale Gesamtdicke unmittelbar im Halteeingriff kann auf diese Weise zumindest im Wesentlichen auf die Summe der Dicken der Dichtungslagen in der unmittelbaren Umgebung des Halteeingriffs begrenzt werden.

In vorteilhaften ersten Ausführungen wirken das Halteelement und das Haltegegenelement im Halteeingriff nur in axialer Richtung aufeinander. In zweiten Ausführungen können sie Anschlagstellen aufweisen, die im Halteeingriff einander quer zur axialen Richtung zugewandt gegenüberliegen und die Beweglichkeit der Dichtungslagen quer zur axialen Richtung durch Anschlagkontakt der Anschlagstellen beschränken. Da die Dichtungslagen jedoch über den einen oder die mehreren Faltabschnitte quer zur axialen Richtung relativ zueinander positioniert sind, kann auf eine zusätzliche Fixierung quer zur axialen Richtung im Halteeingriff verzichtet werden, zumal ein Queranschlag bei Relativbewegungen, wie sie im Betrieb zwischen den Dichtungslagen auftreten können, immer auch die Gefahr von Abrieb und somit Schmutzeintrag birgt.

Der eine oder die mehreren Faltabschnitte definieren eine Faltachse der Sickendichtung. Die Faltachse erstreckt sich in einer axialen Draufsicht auf die aufgefaltete Sickendichtung in dem einen oder den mehreren Faltabschnitten quer zur axialen Richtung. Sie kann sich durch den einen oder die mehreren Faltabschnitte erstrecken. In den meisten Ausführungen wird sie sich vor dem Falten jedoch in einem gewissen axialen Versatz zu dem oder den Faltabschnitte(n) erstrecken.

In vorteilhaften Ausführungen ist der eine oder sind die mehreren Faltabschnitte jeweils in der Draufsicht längs der Faltachse gemessen deutlich schmaler als die Sickendichtung. Eine parallel zur Faltachse gemessen maximale Breite der Sickendichtung ist in vorteilhaften Ausführungen wenigstens dreimal oder wenigstens fünfmal so groß wie die jeweilige Faltabschnittsbreite. Wenn hier von einer maximalen Breite der Sickendichtung gesprochen wird, bezieht sich dies nur auf die parallel zur Faltachse gemessene Breite.

Die erste Dichtungslage und die zweite Dichtungslage können über nur einen einzigen Faltabschnitt miteinander verbunden sein. In Weiterbildungen umfasst die Sickendichtung jedoch einen ersten Faltabschnitt und einen zweiten Faltabschnitt, die sich in der axialen Draufsicht in einem Abstand voneinander erstrecken. In der Draufsicht auf die noch nicht gefaltete Sickendichtung, d. h. in einer Abwicklung der Sickendichtung, verbleibt somit längs der Faltachse zwischen den Faltabschnitten eine materialfreie Aussparung. In bevorzugten Ausführungen werden die erste Dichtungslage und die zweite Dichtungslage durch genau zwei in der Draufsicht in Richtung der Faltachse gemessen vergleichsweise schmale Faltabschnitte miteinander verbunden.

Die erste Dichtungslage und die zweite Dichtungslage können in der axialen Draufsicht auf die aufgefaltete Sickendichtung von dem einen oder den mehreren Faltabschnitten wegweisend flügelförmig vorragen.

Für eine genaue Positionierung der Dichtungslagen relativ zueinander ist es vorteilhaft, wenn der jeweilige Faltabschnitt im aufgefalteten Zustand der Sickendichtung längs der Faltachse vorgeformt ist, d.h. mit einer Faltvorformung versehen, beispielsweise längs der Faltachse lokal gebaucht oder geprägt ist, um die Faltachse vorzugeben und das Falten zu erleichtern.

Zur Vermeidung von Problemen beim Transport, einer Magazinierung, Vereinzelung und schließlich einer automatisierten Montage der Sickendichtung, ist es von Vorteil, wenn die Dichtungslagen nach Herstellung des Halteeingriffs über den äußeren Umfangsrand dicht aneinander liegen, um ein Verhaken von Sickendichtungen zu verhindern. Hierfür ist es vorteilhaft, wenn die erste Dichtungslage und/oder die zweite Dichtungslage, bevorzugt beide Dichtungslagen, bis zum äußeren Umfangsrand konkav in Bezug auf die jeweils andere der Dichtungslagen gewölbt ist oder jeweils sind. Dies bedeutet, dass die jeweilige Dichtungslage bei axial einander zugewandten Dichtungslagen vor Herstellung des Halteeingriffs in einem kräftefreien Zustand in zur Faltachse parallelen und zu den Dichtungslagen orthogonalen Axialebenen bis zu ihrem äußeren Umfangsrand konkav in Bezug auf die andere der Dichtungslagen ist, so dass dem äußeren Umfangsrand nahe Stirnflächen der Dichtungslagen in diesen axial erstreckten Ebenen in Richtung auf den äußeren Umfangsrand unter einem spitzen Winkel aufeinander zu laufen und nahe dem äußeren Umfangsrand erst unter Einwirkung einer axialen Kraft, die insbesondere im Halteeingriff von Halteelement und Haltegegenelement erzeugt werden kann, in Flächenkontakt oder zumindest einen definierten Linienkontakt gelangen. Auf diese Weise kann einem Auseinanderklaffen und damit einhergehend der Bildung eines Spalts am äußeren Umfang der Sickendichtung entgegengewirkt werden. Durch die konkave Vorformung wird erreicht, dass sich die Dichtungslagen am äußeren Umfangsrand und im randnahen Bereich unter der im Halteeingriff axial wirkenden Kraft über ihre gesamte Fläche gesehen in einem geringen Ausmaß elastisch verformen und dabei am Umfangsrand aneinander legen.

Um besagte Konkavität zu erhalten, kann oder können die erste Dichtungslage und/oder die zweite Dichtungslage mit einem großen Krümmungsradius und daher in Bezug auf die jeweils andere Dichtungslage mit einer flachen, runden Ausbauchung gewölbt sein. In vorteilhaften Ausführungen ist oder sind die erste Dichtungslage und/oder die zweite Dichtungslage geknickt und fällt im unbelasteten Zustand vom Knick nach beiden Seiten dachförmig schräg ab. Der Knick kann sich in axialer Draufsicht auf die so vorgeformte Dichtungslage schräg unter einem Winkel von vorteilhafterweise 90°±30° oder 90°±20° erstrecken. Je weniger der Winkel von 90° abweicht, desto günstiger werden die Verhältnisse. Bevorzugt erstreckt sich der Knick orthogonal zur Faltachse. Andererseits ist es vorteilhaft, wenn sich der Knick nur neben der einen oder den mehreren Dichtungsschleifen der jeweiligen Dichtungslage und nicht durch eine Dichtungsschleife erstreckt. In zur Faltachse parallelen und zu den Dichtungslagen orthogonalen Axialebenen bilden die Dichtungslagen vor Herstellung des Halteeingriffs ein flaches Dreieck oder eine flache Raute. Der Knick kann sich in der Draufsicht insbesondere durch einen zentralen Bereich der geknickten Dichtungslage erstrecken. Grundsätzlich kann die jeweilige Dichtungslage auch mehrfach geknickt sein. Vorteilhaft weist die jeweilige Dichtungslage jedoch nur einen einzigen Knick auf.

In einer anderen Weiterbildung, die mit der vorgenannten vorteilhaft kombiniert, aber auch ohne diese verwirklicht sein kann, wölbt oder wölben sich die erste Dichtungslage und/oder die zweite Dichtungslage in einem kräftefreien Zustand in einer zur Faltachse orthogonalen Faltebene, die sich durch den Halteeingriff erstreckt, von der Faltachse in Richtung Halteeingriff konvex von der jeweils anderen der Dichtungslagen weg. Auch die Konvexität ist auf einen Zustand bezogen, in dem sich die Dichtungslagen axial zugewandt sind, der Halteeingriff aber noch nicht hergestellt ist. Die konvexe Wölbung erhöht die in axialer Richtung wirkende Spannkraft im Halteeingriff und wirkt einem eventuellen Axialspiel im Halteeingriff entgegen. Dies ist sowohl für die Handhabung, wie schon im Zusammenhang mit der Konkavität erläutert, als auch im Einsatz in bevorzugten Verwendungen, wie etwa als Auslassdichtung einer Pumpe, von Vorteil, um axiale Bauteil- und/oder Montagetoleranzen und/oder Druck- und/oder Temperaturänderungen besser kompensieren zu können.

Die Sickendichtung kann insbesondere eine Metallsickendichtung sein, wodurch, im Vergleich zu einer Elastomer- oder Elastomerverbunddichtung, eine kostengünstige, die technische Sauberkeit fördernde (kein Abtrag von Elastomerpartikel), zuverlässige und langlebige (da keine Spaltextrusion) Dichtung bereitgestellt werden kann. Die Dichtungslagen sind vorzugsweise Blechstrukturen. Bevorzugt werden die Dichtungslagen aus einem Federstahlblech gefertigt. Die Dichtungslagen einschließlich Haltelement und Haltegegenelement können über den einen oder die mehreren Faltabschnitte zusammenhängend aus einem Metallblech, insbesondere einem Federstahlblech, geformt sein, zweckmäßigerweise durch Stanzen und Tiefziehen. So können in einem ersten Schritt Durchgänge für das Fluid, Aussparungen wie etwa zur Herstellung des Halteelements oder der gegebenenfalls mehreren Halteelemente durch Stanzen erzeugt, eine oder mehrere Sicken mittels Tiefziehen geformt und anschließend der jeweilige Dichtungsrohling, d.h. die Sickendichtung im aufgefalteten Zustand, durch Stanzen aus einem größeren Blechnutzen vereinzelt werden.

Die Sickendichtung kann insbesondere eine unbeschichtete Metallsickendichtung sein. Es soll jedoch nicht ausgeschlossen werden, dass die Sickendichtung eine Metallsickendichtung ist und die erste Dichtungslage und/oder die zweite Dichtungslage mit einem nachgiebigen Dichtungsmaterial, beispielsweise einem Elastomer oder thermoplastischen Elastomer (TPE), beschichtet oder belegt ist/sind, um die Mikrodichtwirkung zu verbessern. Einer unbeschichteten Metallsickendichtung wird jedoch der Vorzug gegeben, da mit einer Elastomerbeschichtung die Gefahr von Abrieb und/oder einer Ablösung und somit der Verschmutzung erhöht wird.

In vorteilhaften Ausführungen weisen die erste Dichtungslage eine erste Dichtungsschleife und die zweite Dichtungslage eine zweite Dichtungsschleife auf. Die erste Dichtungsschleife umgibt in axialer Draufsicht einen von Fluid durchströmbaren ersten Innenbereich und weist eine Dichtungsstirnfläche für axialen Kontakt mit einem der den abzudichtenden Spalt begrenzenden Bauteile auf. Die zweite Dichtungsschleife umgibt in der Draufsicht einen vom Fluid durchströmbaren zweiten Innenbereich und weist eine Dichtungsstirnfläche für axialen Kontakt mit dem anderen der den Spalt begrenzenden Bauteile auf. In der Draufsicht gesehen überlappen der erste Innenbereich und der zweite Innenbereich einander zumindest teilweise, bevorzugt gänzlich. Wenigstens eine der Dichtungsschleifen ist eine Sickenschleife. Soweit eine Dichtungsschleife als Sickenschleife gebildet ist, ist die genannte Dichtungsstirnfläche eine Sickenstirnfläche. Dabei kann die erste Dichtungsschleife eine erste Sickenschleife und/oder die zweite Dichtungsschleife eine zweite Sickenschleife sein. Bevorzugt sind die erste Dichtungsschleife eine erste Sickenschleife und die zweite Dichtungsschleife eine zweite Sickenschleife. Grundsätzlich wäre es jedoch denkbar, dass eine dieser beiden Dichtungsschleifen beispielsweise eine plane Dichtungsschleife ist, die auf der von der anderen Dichtungsschleife abgewandten Außenseite beispielsweise mit einem elastomeren Dichtungsmaterial beschichtet ist.

Wegen der linienförmigen Pressung der jeweiligen Sickenschleife kann eine kritische Mindestflächenpressung besser als bei Verwendung von Weichstoffdichtungen auch dann eingehalten werden, wenn sich die Spaltweite vergleichsweise stark ändert. Die erfindungsgemäße Sickendichtung kann Variationen der Spaltweite von vorteilhafterweise mehr als 0.1 mm, in manchen Verwendungen von 0.2 mm oder noch mehr ausgleichen.

Die erste Dichtungslage weist im ersten Innenbereich einen Durchgang für das Fluid auf. Die erste Dichtungsschleife umgibt in axialer Draufsicht den im ersten Innenbereich gelegenen Durchgang. Sie ist eine kleinste, den Durchgang des ersten Innenbereichs umgebende Dichtungsschleife. Dies bedeutet, dass der betreffende Durchgang von keiner kleineren Dichtungsschleife umgeben wird. Vorzugsweise umgibt die erste Dichtungsschleife in der axialen Draufsicht auch keinen anderen Dichtsteg der Sickendichtung, wie etwa eine andere Dichtungsschleife. Bevorzugt weist die erste Dichtungslage im ersten Innenbereich nebeneinander mehrere Durchgänge auf, und die erste Dichtungsschleife umgibt diese Durchgänge als kleinste Dichtungsschleife. Die erste Dichtungsschleife, falls als erste Sickenschleife ausgeführt, ist vorzugsweise eine Halbsicke, kann alternativ aber auch eine Vollsicke sein.

Die zweite Dichtungslage weist im zweiten Innenbereich ebenfalls einen Durchgang für das Fluid auf. Die zweite Dichtungsschleife umgibt in axialer Draufsicht den im zweiten Innenbereich gelegenen Durchgang und ist eine kleinste, den Durchgang des zweiten Innenbereichs umgebende Dichtungsschleife. Dies bedeutet, dass der betreffende Durchgang von keiner kleineren Dichtungsschleife umgeben wird. Vorzugsweise umgibt die zweite Dichtungsschleife in der axialen Draufsicht auch keinen anderen Dichtsteg der Sickendichtung, wie etwa eine andere Dichtungsschleife. Bevorzugt weist die zweite Dichtungslage im zweiten Innenbereich nebeneinander mehrere Durchgänge auf, und die zweite Dichtungsschleife umgibt diese Durchgänge als kleinste Dichtungsschleife. Die zweite Dichtungsschleife, falls als zweite Sickenschleife ausgeführt, ist vorzugsweise eine Halbsicke, kann alternativ aber auch eine Vollsicke sein. Sind die erste Dichtungsschleife und die zweite Dichtungsschleife jeweils Sickenschleifen, sind die erste Sickenschleife und die zweite Sickenschleife vorteilhafterweise diesbezüglich von der gleichen Art.

Die axiale Richtung ist die Hauptströmungsrichtung des Fluids durch den jeweiligen Durchgang der ersten und zweiten Dichtungslage.

Die erste Dichtungsschleife kann in der Draufsicht über 360° vollständig um den ersten Innenbereich umlaufen und den einen oder die mehreren Durchgänge vorteilhafterweise lückenlos bzw. unterbrechungsfrei umgeben. In derartigen Ausgestaltungen wird der erste Innenbereich im Dichtkontakt, d. h. im eingebauten Zustand, von der radial äußeren Umgebung der Dichtungsschleife fluidisch getrennt. Grundsätzlich soll jedoch nicht ausgeschlossen werden, dass die erste Dichtungsschleife einen Fluss in radialer Richtung aus dem ersten Innenbereich nach außen oder von außen in den ersten Innenbereich zulässt, indem sie über ihren Umfang lokal an einer oder gegebenenfalls auch an mehreren Stellen unterbrochen ist. Für die zweite Dichtungsschleife gilt sinngemäß das Gleiche.

Die erste Dichtungslage kann eine erste Versteifungsstruktur umfassen, die sich in der Draufsicht von der ersten Dichtungsschleife in den ersten Innenbereich erstreckt, den ersten Innenbereich vorzugsweise durchquert, und die erste Dichtungsschleife dadurch versteift. Anstelle der ersten Dichtungslage oder vorzugsweise zusätzlich kann die zweite Dichtungslage eine zweite Versteifungsstruktur umfassen, die sich in der Draufsicht von der zweiten Dichtungsschleife in den zweiten Innenbereich erstreckt, den zweiten Innenbereich vorzugsweise durchquert, und die zweite Dichtungsschleife versteift.

Die jeweilige Versteifungsstruktur erschwert die elastische Verformung der Sickendichtung im jeweiligen Innenbereich, wenn sich die axiale Weite des zu dichtenden Spalts aufgrund veränderter Betriebsbedingungen oder von Einbaufall zu Einbaufall toleranzbedingt verkleinert. Durch die Versteifung im ersten Innenbereich und/oder im zweiten Innenbereich wird die Kraft-Weg-Charakteristik der Sickendichtung verbessert, so dass die erfindungsgemäße Sickendichtung größere Variationen der axialen Weite der abzudichtenden Fuge ausgleichen kann. Im Vergleich zu einer herkömmlich gestalteten Sickendichtung ohne Versteifungsstruktur (Vergleichsdichtung) wird die Flächen- bzw. Linienpressung im Dichtkontakt erhöht. Die erfindungsgemäße Sickendichtung setzt einer Verringerung der Fugenweite im zu erwartenden Variationsbereich der Fugenweite eine rückstellende Federkraft entgegen, die größer als die der Vergleichsdichtung ist. Sie kann vorteilhafterweise mit einer höheren axialen Vorspannkraft als die Vergleichsdichtung eingebaut werden.

Insbesondere bei Ausbildung der jeweiligen Dichtungsschleife als Halbsicke kann die Versteifungsstruktur eine Klapp- oder Kippneigung der Dichtungsschleife reduzieren, wodurch ein Dichtkontakt zuverlässiger gewährleistet werden kann.

Die erste Versteifungsstruktur, falls vorhanden, und die erste Dichtungsschleife sind vorteilhaft fest, insbesondere zerstörungsfrei nicht voneinander trennbar, miteinander verbunden und besonders vorteilhaft einteilig geformt. Die zweite Versteifungsstruktur, falls vorhanden, und die zweite Dichtungsschleife sind vorteilhaft fest, insbesondere zerstörungsfrei nicht voneinander trennbar, miteinander verbunden und besonders vorteilhaft in einem Stück geformt.

Unter "in einem Stück geformt" wird eine Formung, die eines Fügens nicht bedarf, verstanden. Bevorzugt sind die jeweilige Dichtungsschleife und ihre Versteifungsstruktur, soweit eine solche vorhanden ist, aus einem einzigen Rohling geformt, vorteilhafterweise durch Umformung des Rohlings.

Die erste Dichtungslage weist in einfachen Ausgestaltungen nur die erste Dichtungsschleife und dementsprechend nur den ersten Innenbereich auf. In einer Weiterentwicklung umfasst die erste Dichtungslage eine weitere, dritte Dichtungsschleife. Die dritte Dichtungsschleife kann insbesondere eine Sickenschleife sein und wird in derartigen Ausführungen der Zuordnung wegen als dritte Sickenschleife bezeichnet. Die dritte Dichtungsschleife umgibt in der axialen Draufsicht einen neben dem ersten Innenbereich gelegenen dritten Innenbereich und weist eine Dichtungsstirnfläche, vorzugsweise Sickenstirnfläche, für axialen Kontakt mit einem der Bauteile auf. Die erste Dichtungslage kann die dritte Dichtungsschleife in axialer Draufsicht neben der ersten Dichtungsschleife, vorzugsweise in einem Abstand und somit separat von der ersten Dichtungsschleife, aufweisen. Im dritten Innenbereich ist ebenfalls ein Durchgang für Fluid gelegen. Die dritte Dichtungsschleife kann ebenfalls eine kleinste, den Durchgang des dritten Innenbereichs umgebende Dichtungsschleife sein. In Bezug auf eine Versteifung der dritten Dichtungsschleife mittels einer optionaler dritten Versteifungsstruktur gelten die zur Versteifung der ersten Dichtungsschleife gemachten Ausführungen in gleicher Weise. Die dritte Dichtungsschleife, falls als Sickenschleife ausgeführt, ist vorzugsweise eine Halbsicke, kann alternativ aber auch eine Vollsicke sein.

Die Sickendichtung kann in Bezug auf die dritte Dichtungsschleife herkömmlich ausgeführt sein oder, wie in bevorzugten Ausgestaltungen, eine dritte Versteifungsstruktur umfassen, die sich von der dritten Dichtungsschleife in den dritten Innenbereich erstreckt, um die dritte Dichtungsschleife zu versteifen.

Die zweite Dichtungslage kann eine vierte Dichtungsschleife, vorzugsweise Sickenschleife, aufweisen. Die vierte Dichtungsschleife kann in der axialen Sicht einen vierten Innenbereich mit einem oder mehreren Durchgängen für das Fluid umgeben und eine Dichtungsstirnfläche, vorzugsweise Sickenstirnfläche, für Dichtkontakt mit einem der Bauteile oder noch einer weiteren Dichtungsschleife aufweisen. Die dritte Dichtungsschleife und die vierte Dichtungsschleife können relativ zueinander derart vorgesehen sein, dass der dritte Innenbereich und der vierte Innenbereich einander in der axialen Draufsicht überlappen. In Bezug auf eine Versteifung der vierten Dichtungsschleife mittels einer optionaler vierten Versteifungsstruktur gelten die zur Versteifung der ersten Dichtungsschleife gemachten Ausführungen in gleicher Weise. Die vierte Dichtungsschleife, falls als Sickenschleife ausgeführt, kann eine Vollsicke oder eine Halbsicke sein. In vorteilhaften Ausführungen sind die dritte Sickenschleife und die vierte Sickenschleife diesbezüglich von der gleichen Art.

Die Dichtungslagen liegen im montagebereiten Zustand der Sickendichtung axial übereinander. Zwischen der ersten Dichtungslage und der zweiten Dichtungslage kann eine oder können gegebenenfalls auch mehrere Zwischenlagen angeordnet sein. In bevorzugten Ausgestaltungen liegen die erste Dichtungslage und die zweite Dichtungslage jedoch unmittelbar aufeinander.

Die erste Dichtungsschleife und jede weitere Dichtungsschleife weist jeweils eine Dichtungsstirnfläche, bevorzugt eine Sickenstirnfläche, für axialen Kontakt mit einem Steg des jeweiligen Bauteils oder einer optionalen Dichtungszwischenlage der Sickendichtung auf. Wenn es im Zusammenhang mit einer Versteifungsstruktur heißt, dass sich die jeweilige Versteifungsstruktur in der axialen Draufsicht von der jeweiligen Dichtungsschleife in deren Innenbereich erstreckt, so bedeutet dies, dass die betreffende Versteifungsstruktur im eingebauten Zustand der Sickendichtung über den Steg des jeweiligen Bauteils nach radial innen vorragt. Die Versteifungsstruktur behindert somit die Strömung des Fluids in axialer Richtung, sie bildet also einen Strömungswiderstand.

Die jeweilige Versteifungsstruktur kann von der Dichtungsschleife, zu deren Versteifung sie vorgesehen ist, ein Stück weit in den Innenbereich ragen. Sie kann die Dichtungsschleife beispielsweise ein kleines Stück weit nach radial innen verlängern, so dass die jeweilige Dichtungsschleife beispielsweise über den Bauteilsteg, an den sie angelegt werden soll, umlaufend ein kleines Stück nach innen ringförmig vorragt.

In bevorzugten Ausgestaltungen durchquert die jeweilige Versteifungsstruktur den Innenbereich der Dichtungsschleife, zu deren Versteifung sie vorgesehen ist. In vorteilhaften Ausgestaltungen durchquert die Versteifungsstruktur den zentralen Bereich des jeweiligen Innenbereichs. Die jeweilige Versteifungsstruktur kann in der axialen Draufsicht beispielsweise ein Verbindungssteg sein, der den jeweiligen Innenbereich durchquert. In Weiterbildungen kann die jeweilige Versteifungsstruktur mehrere Verbindungsstege umfassen. Die mehreren Verbindungsstege können in der Draufsicht beispielsweise sternförmig angeordnet sein. In weiteren Ausgestaltungen ist die jeweilige Versteifungsstruktur gitterförmig, netzförmig oder siebförmig.

Die jeweilige Versteifungsstruktur kann scheibenförmig, d.h. plan, oder schalenförmig, d.h. gewölbt, sein.

Grundsätzlich genügt es, wenn im Innenbereich der jeweiligen Dichtungsschleife ein einziger zusammenhängender Durchgang für das Fluid vorgesehen ist. In bevorzugten Ausgestaltungen sind im jeweiligen Innenbereich jedoch mehrere, voneinander getrennte Durchgänge angeordnet, die gemeinsam einen durchströmbaren Querschnitt der jeweiligen Dichtungsschleife bzw. des jeweiligen Innenbereichs bilden. So kann die jeweilige Versteifungsstruktur beispielsweise mehr als 30 % oder, bevorzugter, den überwiegenden Teil des von der jeweiligen Sickenschleife umgebenen Innenbereichs ausfüllen und mit dem einen oder den bevorzugt mehreren Durchgängen der jeweiligen Sickenschleife versehen sein. Die optionale erste Versteifungsstruktur und/oder die optionale zweite Versteifungsstruktur und/oder die optionale dritte Versteifungsstruktur und/oder die optionale vierte Versteifungsstruktur kann oder können insbesondere mehrfach perforiert sein, in der Draufsicht also nebeneinander eine Mehrzahl von Durchgängen für das Fluid aufweisen, die gemeinsam den von der jeweiligen Dichtungsschleife umgebenen, durchströmbaren Querschnitt, d. h. den von der jeweiligen Dichtungsschleife umgebenen Strömungsquerschnitt, bilden. Die in der axialen Sicht gemessene Querschnittsfläche des von der jeweiligen Dichtungsschleife umgebenen Innenbereichs ist vorteilhafterweise wenigstens fünfmal oder wenigstens zehnmal größer als der jeweilige einzelne Durchgang der mehreren Durchgänge. Die Durchgänge können insbesondere runde, beispielsweise kreisrunde, Durchgangslöcher sein.

In Verwendungen, in denen die Sickendichtung der Abdichtung eines Auslasses einer Schmierölpumpe dient, kann die jeweilige Versteifungsstruktur mit Vorteil als Drossel wirken. Die Drosselwirkung der jeweiligen Versteifungsstruktur kann in einem kalten Ausgangszustand der Pumpe von Vorteil sein, um Druckspitzen abzubauen, die von einer im kalten Zustand erhöhten Viskosität des Fluids herrühren. Derartige Druckspitzen können beispielsweise einen stromab der Pumpe angeordneten Filter schädigen.

Die Pumpe kann vorteilhafterweise als Flügelzellenpumpe ausgeführt sein. Die Unterflügelbereiche der Flügel können mit der Hochdruckseite der Pumpe verbunden sein, um die Flügel an ihren Unterseiten mit dem Fluid der Hochdruckseite beaufschlagen zu können. Bei Flügelzellenpumpen mit Unterflügeldruckversorgung kann/können die erste Versteifungsstruktur und/oder die zweite Versteifungsstruktur, falls vorhanden, als Kaltstartunterstützer genutzt werden. Zusätzlich oder stattdessen kann/können die dritte Versteifungsstruktur, falls vorhanden, und/oder die vierte Versteifungsstruktur, falls vorhanden, als Kaltstartunterstützer genutzt werden. Insbesondere im kalten Ausgangszustand, beispielsweise beim Kaltstart einer Pumpe, erschwert die jeweilige Versteifungsstruktur mit ihrer Drosselwirkung das Abströmen des geförderten Fluids, insbesondere Öl, aus der Pumpe. Die Unterflügelbereiche sind vorzugsweise stromauf der Sickendichtung an die Hochdruckseite der Pumpe angeschlossen. In derartigen Ausführungen bewirkt die jeweilige Versteifungsstruktur aufgrund der im kalten Zustand erhöhten Zähigkeit des Fluids eine verstärkte Drosselwirkung und dadurch bei einem Kaltstart der Pumpe eine besonders rasche Druckversorgung der Unterflügelbereiche, so dass das Fluid beim Kaltstart die Flügel schon bei niedriger Drehzahl des Förderglieds nach außen gegen eine den Rotor umgebende Hubkontur drückt. Die jeweilige Versteifungsstruktur kann so gestaltet sein, dass das geförderte Fluid im kalten Zustand vorrangig der Unterflügeldruckversorgung zur Verfügung steht und damit die Unterflügelbereiche vorrangig mit dem Fluid versorgt werden, um die Flügel nach außen gegen die Hubkontur zu drücken.

Zusätzlich oder in anderen Verwendungen kann die jeweilige Versteifungsstruktur beispielsweise als Filter oder Sieb genutzt werden. Ferner ist es denkbar, dass die jeweilige Versteifungsstruktur zur Vergleichmäßigung der Fluidströmung genutzt wird.

Die Erfindung betrifft eine Sickendichtung nicht nur als solche, sondern auch in bevorzugten Verwendungen, in denen sie der Abdichtung eines oder mehrerer Pumpenauslässe dient. Des Weiteren betrifft die Erfindung eine Pumpe zur Beaufschlagung oder Versorgung eines Aggregats mit einem Druckfluid. Hierbei kann es sich beispielsweise um eine Getriebepumpe zur Versorgung eines Getriebes mit hydraulischem Fluid, eine Schmier- und/oder Kühlmittelpumpe zur Versorgung eines Antriebsmotors, wie etwa eines Verbrennungsmotors oder Elektromotors, mit Schmierund/oder Kühlmittel, beispielsweise mit Schmieröl handeln.

Die Pumpe umfasst ein Pumpengehäuse mit einer Gehäuse-Umfangswand und einer Gehäuse-Stirnwand. Die Gehäuse-Umfangswand umgibt eine Förderkammer der Pumpe. Die Gehäuse-Stirnwand weist eine der Förderkammer axial abgewandte äußere Gehäuse-Stirnfläche auf. Die Gehäuse-Stirnwand kann die Förderkammer vorteilhafterweise an einer ihrer Stirnseiten begrenzen, muss aber keine Kammerwand sein, sondern kann von der Förderkammer abgerückt sein. Das Pumpengehäuse umfasst einen Einlass und einen Auslass für das Fluid. Der Auslass mündet an der äußeren Gehäuse-Stirnfläche der Gehäuse-Stirnwand. Die Pumpe umfasst ferner ein Förderglied, das in der Förderkammer beweglich ist, um das Fluid von einer den Einlass umfassenden Niederdruckseite der Pumpe zu einer Hochdruckseite der Pumpe und dort durch den Auslass zu fördern.

Nach der Erfindung umfasst die Pumpe eine Sickendichtung mit einer ersten Dichtungslage und einer zweiten Dichtungslage, die axial übereinander liegen. Vorzugsweise liegen die Dichtungslagen axial aneinander. Die Sickendichtung dient als Auslassdichtung. Die erste Dichtungslage weist eine erste Dichtungsschleife und die zweite Dichtungslage eine zweite Dichtungsschleife auf. Die erste Dichtungsschleife umgibt in axialer Draufsicht auf die Pumpe einen vom Fluid durchströmbaren ersten Innenbereich. Sie weist eine Dichtungsstirnfläche für axialen Kontakt mit einem Dichtsteg auf. Die zweite Dichtungsschleife umgibt in axialer Draufsicht einen vom Fluid durchströmbaren zweiten Innenbereich und weist eine Dichtungsstirnfläche für axialen Kontakt mit einem anderen Dichtsteg auf. Der erste Innenbereich und der zweite Innenbereich überlappen einander in der Draufsicht zumindest teilweise, bevorzugt überlappen sie gänzlich. Zumindest eine der Dichtungsschleifen ist eine Sickenschleife. Somit ist oder sind die erste Dichtungsschleife eine erste Sickenschleife und/oder die zweite Dichtungsschleife eine zweite Sickenschleife. Die jeweilige Dichtungsstirnfläche ist eine Sickenstirnfläche. Eine der Dichtungsschleifen ist zur Abdichtung des Auslasses der äußeren Gehäuse-Stirnfläche axial zugewandt und umgibt den Auslass in der Draufsicht. Im eingebauten Zustand der Pumpe ist diese Dichtungsschleife in einem stirnseitigen axialen Dichtkontakt mit einem Dichtsteg der äußeren Gehäuse-Stirnfläche des Pumpengehäuses. Die andere Dichtungsschleife weist eine der äußeren Gehäuse-Stirnfläche axial abgewandte Dichtungsstirnfläche für axialen Dichtkontakt auf.

Weist die Sickendichtung die erste Versteifungsstruktur und/oder die zweite Versteifungsstruktur auf, überlappt die jeweilige Versteifungsstruktur in der Draufsicht mit dem Auslass, ragt also in den freien Strömungsquerschnitt des Auslasses.

Dient die Sickendichtung als Auslassdichtung, eignet sich die Pumpe nicht zuletzt wegen der erfindungsgemäßen Sickendichtung in besonderer Weise für Verwendungen, in denen das Pumpengehäuse zumindest teilweise in einen Aufnahmeschacht einer Aufnahmeeinrichtung hineinragt, wie dies beispielsweise bei Getriebepumpen üblich ist. In derartigen Verwendungen ragt die Pumpe mit der Sickendichtung axial voran in den Aufnahmeschacht, so dass die Sickendichtung den Pumpenauslass zum Boden des Aufnahmeschachts hin abdichtet. Der axiale Spalt wird zwischen der äußeren Stirnseite des Pumpengehäuses, an der die Sickendichtung angeordnet ist, und dem axial gegenüber liegenden Schachtboden gebildet.

Die Sickendichtung kann in einem Kraftnebenschluss zu einer Federeinrichtung angeordnet sein. Eine Federeinrichtung kann beispielsweise vorgesehen sein, um im eingebauten Zustand der Pumpe die Gehäuse-Stirnwand mit Federkraft axial gegen die Gehäuse-Umfangswand zu drücken, falls diese beiden Gehäusewände, wie etwa bei Cartridge-Pumpen üblich, axial lose in einem Stapel vorliegen. Die Federeinrichtung nimmt im Vergleich zur Sickendichtung vorteilhafterweise einen größeren Teil der über den axialen Spalt wirkenden Axialkräfte auf. Die im Kraftnebenschluss angeordnete Sickendichtung muss nur die im axialen Dichtkontakt für die sichere Abdichtung erforderlichen Axialkräfte aufnehmen und kann daher auf ihre eigentliche Aufgabe, die Dichtwirkung, optimiert werden. Die Sickendichtung kann alternativ im Krafthauptschluss angeordnet sein. Sie kann in derartigen Ausführungen die Federeinrichtung bilden, um die Pumpe axial in ihre Befestigung zu spannen. Die Federeinrichtung, falls vorhanden, kann am Einbauort vorgesehen oder bevorzugt eine vormontierte Komponente der Pumpe sein.

Die Pumpe kann beispielsweise eine Linearhubpumpe oder, bevorzugter, eine Rotationspumpe sein. Sie kann als Rotationspumpe außenachsig, beispielsweise eine Außenzahnradpumpe sein. Alternativ kann sie eine innenachsige Pumpe, beispielsweise eine Innenzahnradpumpe oder Pendelschieberpumpe oder vorzugsweise eine Flügelzellenpumpe sein. Das Förderglied kann ein in der Förderkammer um eine Drehachse drehbewegliches Zahnrad sein oder einen in der Förderkammer um eine Drehachse drehbeweglichen Rotor sowie Flügel oder Schieber umfassen, um das Fluid von einer Niederdruckseite der Pumpe zu einer Hochdruckseite der Pumpe und durch einen Auslass der Pumpe zu fördern. Das Förderglied kann vorteilhafterweise zur Bildung von Förderzellen dienen, die sich bei Drehung des Rotors periodisch vergrößern und verkleinern, um das Fluid von der Niederdruckseite der Pumpe zur Hochdruckseite der Pumpe zu fördern.

Bei der Sickendichtung der Pumpe handelt es sich in vorteilhaften Ausführungen um eine Sickendichtung, wie sie hier auch als solche offenbart wird. Die Dichtungslagen sind dann über den einen oder die mehreren Faltabschnitte miteinander verbunden und mittels des wenigstens einen, vorzugsweise genau einen Halteeingriffs gegen ein Aufklaffen aneinander gesichert. Grundsätzlich können die erste Dichtungslage und die zweite Dichtungslage aber auch separat gefertigt sein und die erste Dichtungslage um die erste Dichtungsschleife verteilt mehrere Halteelemente und die zweite Dichtungslage um die zweite Dichtungsschleife verteilt mehrere Haltegegenelemente aufweisen, um die Dichtungslagen übereinanderliegend in mehreren Halteeingriffen aneinander zu positionieren und in Position zueinander zu halten. Die Faltung entfällt in derartigen Ausführungen. Desweiteren ist eine mehrlagige Sickendichtung bereits wegen ihres größeren Federwegs für die Verwendung als Auslassdichtung einer Pumpe vorteilhaft, ungeachtet der Frage, ob zwei oder mehr Dichtungslagen in einem Stück gefertigt und übereinander gefaltet sind oder zwei oder mehr Dichtungslagen mittels eines oder mehrerer Halteeingriffe der hier offenbarten Art aneinander gesichert oder relativ zueinander auch positioniert werden.

Was die Sickendichtung als solche und auch als Auslassdichtung einer Pumpe betrifft, sind Merkmale, wie etwa die im lastfreien Zustand optional verwirklichte konkave und/oder konvexe Vorformung, d.h. einer Wölbung in Form einer runden Ausbauchung oder mittels eines Knicks in Form eines flachen Dachs, wenigstens einer der Dichtungslagen relativ zur jeweils anderen bereits für sich gesehen vorteilhaft. Durch eine derartige Ausbildung können auch übereinander, vorzugsweise aufeinander, angeordnete Dichtungslagen gegeneinander im Umfangsbereich um die erste Dichtungslage und zweite Dichtungslage verspannt und dadurch über diesen Umfang gleichmäßig in einen dichtenden Flächenkontakt gebracht und in diesem gehalten werden. Dies gilt beispielsweise auch in Modifikationen, in denen die erste Dichtungslage und die zweite Dichtungslage separat gefertigt und mittels mehrerer, um die Dichtungsschleifen verteilt angeordneter Halteelemente und Haltegegenelemente der vorstehend beschriebenen Art zusammengehalten werden. Andererseits ist die Fertigung der ersten und zweiten Dichtungslage gemeinsam mit dem einen oder den mehreren Faltabschnitten und deren Faltung zur mehrlagigen Sickendichtung auch ohne den Halteeingriff der vorstehend beschriebenen Art vorteilhaft, beispielsweise in Kombination mit einer anderen Fügeverbindung anstelle des Halteeingriffs, wie etwa einer Falzverbindung oder Nietverbindung.

Ein weiteres, bereits an sich vorteilhaftes Merkmal ist die Versteifung einer oder mehrerer Sickenschleifen einer ein- oder mehrlagigen Sickendichtung im Innenbereich mittels der Versteifungsstruktur(en).

Die hier in Kombination mit der Faltung oder der Faltbarkeit oder dem Halteeingriff beschriebenen Merkmale können mit Vorteil bei jeder Sickendichtung zum Abdichten eines Spalts zwischen einem ersten Bauteil und einem zweiten Bauteil verwirklicht sein, die eine erste Dichtungslage mit einem Halteelement und eine zweite Dichtungslage mit einem Haltegegenelement umfasst, wobei die Dichtungslagen mittels einer Fügeverbindung miteinander gefügt sind. Die Fügeverbindung kann insbesondere ein auf Form- und/oder Reibschluss beruhender Halteeingriff der hier offenbarten Art sein, grundsätzlich kann es sich jedoch auch um eine andere Art von Fügeverbindung, beispielsweise eine Nietverbindung oder Falzverbindung von Halteelement und Haltegegenelement handeln. Eine mehrlagige Sickendichtung dieser Art kann jedes der hier offenbarten Merkmale auch ohne das Merkmal der Faltung/Faltbarkeit und/oder ohne das Merkmal des auf Form- und/oder Reibschluss beruhenden Halteeingriffs verwirklichen.

Nachfolgend werden Ausführungsbeispiele der Erfindung anhand von Figuren erläutert. An den Ausführungsbeispielen offenbar werdende Merkmale bilden jeweils einzeln und in jeder Merkmalskombination die Ansprüche und die vorstehend darüber hinaus beschriebenen Ausgestaltungen vorteilhaft weiter. Es zeigen:
- Figur 1: eine Pumpe in axialer Draufsicht auf eine Förderkammer der Pumpe,
- Figur 2: die Pumpe in einer isometrischen Sicht auf eine Stirnseite, an der eine Sickendichtung eines ersten Ausführungsbeispiels angeordnet ist,
- Figur 3: die Pumpe in axialer Draufsicht auf die Stirnseite mit der Sickendichtung,
- Figur 4: eine Anordnung der Pumpe in einer Aufnahmeeinrichtung,
- Figur 5: die Sickendichtung des ersten Ausführungsbeispiels in einem nicht gefalteten Zustand,
- Figur 6: die Sickendichtung des ersten Ausführungsbeispiels in einem gefalteten und gesicherten Zustand,
- Figur 7: die Sickendichtung des ersten Ausführungsbeispiels in einem Längsschnitt,
- Figur 8: die Sickendichtung des ersten Ausführungsbeispiels in schematischer Darstellung,
- Figur 9: einen Faltabschnitt der Sickendichtung in einem Längsschnitt,
- Figur 10: den Faltabschnitt im nicht gefalteten Zustand,
- Figur 11: eine Halteeinrichtung der Sickendichtung des ersten Ausführungsbeispiels vor Herstellung eines Halteeingriffs,
- Figur 12: die Halteeinrichtung während der Herstellung des Halteeingriffs,
- Figur 13: die Halteeinrichtung im Halteeingriff,
- Figur 14: eine erste Modifikation der Halteeinrichtung,
- Figur 15: eine zweite Modifikation der Halteeinrichtung,
- Figur 16: eine Sickendichtung eines zweiten Ausführungsbeispiels,
- Figur 17: eine Halteeinrichtung der Sickendichtung des zweiten Ausführungsbeispiels vor Herstellung eines Halteeingriffs,
- Figur 18: die im Halteeingriff befindliche Halteeinrichtung des zweiten Ausführungsbeispiels,
- Figur 19: die im Halteeingriff befindliche Halteeinrichtung des zweiten Ausführungsbeispiels in einem Längsschnitt, und
- Figur 20: die im Halteeingriff befindliche Halteeinrichtung des zweiten Ausführungsbeispiels in einer Draufsicht.

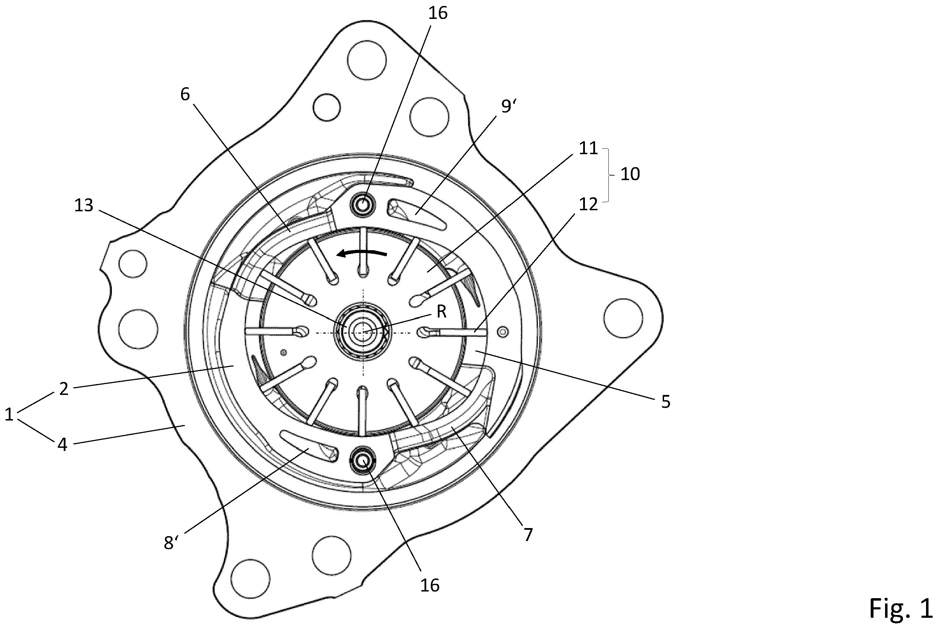

Figur 1 zeigt eine Pumpe in einer axialen Sicht auf ein Pumpengehäuse 1. Im Pumpengehäuse 1 ist eine Förderkammer 5 gebildet. Das Pumpengehäuse 1 umfasst eine Gehäuse-Umfangswand 2, die die Förderkammer 5 umgibt, und Gehäuse-Stirnwände, die die Förderkammer 5 an beiden Stirnseiten axial begrenzen und von denen eine Gehäuse-Stirnwand 4 erkennbar ist. Die andere der Stirnwände ist in Figur 1 abgenommen, um den Blick in die Förderkammer 5 freizugeben.

Die Pumpe ist als Rotationspumpe ausgeführt und umfasst einen in der Förderkammer 5 um eine Drehachse R drehbaren Rotor 11 und mehrere Flügel 12, die in Schlitzen des Rotors 11 radial beweglich oder zumindest im Wesentlichen in radialer Richtung beweglich geführt sind, wie dies bei Flügelzellenpumpen üblich ist. Der Rotor 11 und die Flügel 12 bilden gemeinsam ein Förderglied 10, im Ausführungsbeispiel ein Förderrad, der Pumpe. Die Gehäuse-Umfangswand 2 weist an einem Innenumfang eine Führungsfläche für die Flügel 12 auf. Bei Drehung des Förderglieds 10 werden die Flügel 12 nach außen gegen die Führungsfläche der Gehäuse-Umfangswand 2 gedrückt. Die Führungsfläche bestimmt bei Drehung des Rotors 11, wie weit die Flügel 12 über den Außenumfang des Rotors 11 vorstehen. Die Flügel 12 begrenzen in der Förderkammer 5 gebildete Förderzellen in Umfangsrichtung. Der Verlauf der Führungsfläche der Gehäuse-Umfangswand 2 ist so gewählt, dass sich die Förderzellen bei Drehung des Förderglieds 10 periodisch auf einer Niederdruckseite der Förderkammer 5 vergrößern und auf einer Hochdruckseite der Förderkammer 5 wieder verkleinern, um ein Fluid, das durch einen Einlass auf der Niederdruckseite der Förderkammer 5 in die Förderkammer 5 strömt, mit erhöhtem Druck als Druckfluid auf der Hochdruckseite der Förderkammer 5 durch einen dort befindlichen Auslass auszustoßen. In vorteilhaften Ausgestaltungen ist die Pumpe dafür eingerichtet, das Fluid durch den Einlass anzusaugen, beispielsweise gegen die Schwerkraft.

Der Rotor 11 ist für den Drehantrieb drehunbeweglich mit einer Antriebswelle 13 verbunden. Die Antriebswelle 13 durchsetzt die Gehäuse-Stirnwand 4 und den Rotor 11 und ragt in eine Sackbohrung der in Figur 1 nicht dargestellten Gehäuse-Stirnwand. Die Antriebswelle 13 ragt mit einem Antriebsabschnitt über die Gehäuse-Stirnwand 4 nach außen vor und kann in diesem Antriebsabschnitt drehangetrieben werden. Im Antriebsabschnitt kann ein Antriebsrad, beispielsweise eine Riemenscheibe für einen Riemenantrieb, ein Kettenrad für einen Kettenantrieb oder ein Zahnrad für einen Zahnradantrieb, drehunbeweglich mit der Antriebswelle 13 verbunden sein.

Die Gehäuse-Umfangswand 2 bildet einen geschlossenen Ring, während die Stirnwände 3 und 4 jeweils plattenförmig sind. Die Gehäuse-Umfangswand 2 weist in einem ersten Winkelbereich, über den sich die Niederdruckseite der ersten Arbeitsflut erstreckt, an beiden Stirnseiten jeweils eine Ausnehmung auf, um den ersten Einlass 6 zu bilden. Ferner weist die Gehäuse-Umfangswand 2 in einem anderen Winkelbereich, über den sich die Niederdruckseite der zweiten Arbeitsflut erstreckt, an beiden Stirnseiten jeweils eine zweite Ausnehmung auf, um den zweiten Einlass 7 (Fig. 1) zu bilden. Das Fluid kann über die stirnseitigen Ausnehmungen der Gehäuse-Umfangswand 2, das heißt über den ersten Einlass 6 und den zweiten Einlass 7, in die Förderkammer 5 (Figur 1) strömen. Die Gehäuse-Umfangswand 2 weist im Winkelbereich des Einlasses 6 und im Winkelbereich des Einlasses 7 ferner jeweils eine Ausnehmung an ihrem äußeren Umfang auf. Die Ausnehmungen am Umfang erstrecken sich axial jeweils von der einen stirnseitigen Ausnehmung zur axial gegenüberliegend anderen stirnseitigen Ausnehmung. Die Ausnehmungen am Umfang verbinden die beiden stirnseitigen Ausnehmungen des ersten Einlasses 6 und auf der gegenüberliegenden Seite die beiden stirnseitigen Ausnehmungen des zweiten Einlasses 7, sodass ein großvolumiger erster Einlass 6 und ein ebenfalls großvolumiger zweiter Einlass 7 erhalten werden. Die Gehäuse-Stirnwände 3 und 4 können jeweils mit zugeordneten Ausnehmungen versehen sein, um den Strömungsquerschnitt des Einlasses 6 und den Strömungsquerschnitt des Einlasses 7 zu vergrößern.

Die Gehäuse-Stirnwand 4 weist einen der Montage der Pumpe dienenden Flansch auf. Im montierten Zustand ist das Pumpengehäuse 1 im Bereich des Flansches an einer Aufnahmeeinrichtung fixiert.

Am äußeren Umfang des Pumpengehäuses 1 ist eine Radialdichtung 43 angeordnet. Im Ausführungsbeispiel ist sie in einer am äußeren Umfang der Gehäuse-Stirnwand 4 umlaufenden Nut aufgenommen. Die Radialdichtung 43 dient dazu, am Einbauort einen Niederdruckraum, der das Pumpengehäuse 1 im montierten Zustand am äußeren Umfang umgibt, von der äußeren Umgebung der Pumpe zu trennen.

Die Pumpe ist mehrflutig, im Ausführungsbeispiel zweiflutig, weist also eine erste Arbeitsflut und eine zweite Arbeitsflut auf. Dementsprechend weist die Förderkammer 5 einen ersten Einlass 6 und einen ersten Auslass für die erste Arbeitsflut und einen zweiten Einlass 7 sowie einen zweiten Auslass für die zweite Arbeitsflut auf. Das Förderglied 10 dreht sich im Pumpenbetrieb in Figur 1 gegen den Uhrzeigersinn, was durch einen Drehrichtungspfeil angedeutet ist. Die Druckauslässe sind in der in Figur 1 nicht dargestellten Gehäuse-Stirnwand angeordnet. Mit 8' ist ein auf der Hochdruckseite der ersten Arbeitsflut axial durch die Gehäuse-Umfangswand 2 erstreckter erster Verbindungskanal und mit 9' ist ein auf der Hochdruckseite der zweiten Arbeitsflut axial durch die Gehäuse-Umfangswand 2 erstreckter zweiter Verbindungskanal bezeichnet. Die Verbindungskanäle 8' und 9' verbinden im Bereich der Gehäuse-Stirnwand 4 gebildete Druckräume mit den Druckauslässen der axial gegenüberliegenden, in Figur 1 nicht dargestellten Gehäuse-Stirnwand des Pumpengehäuses 1.

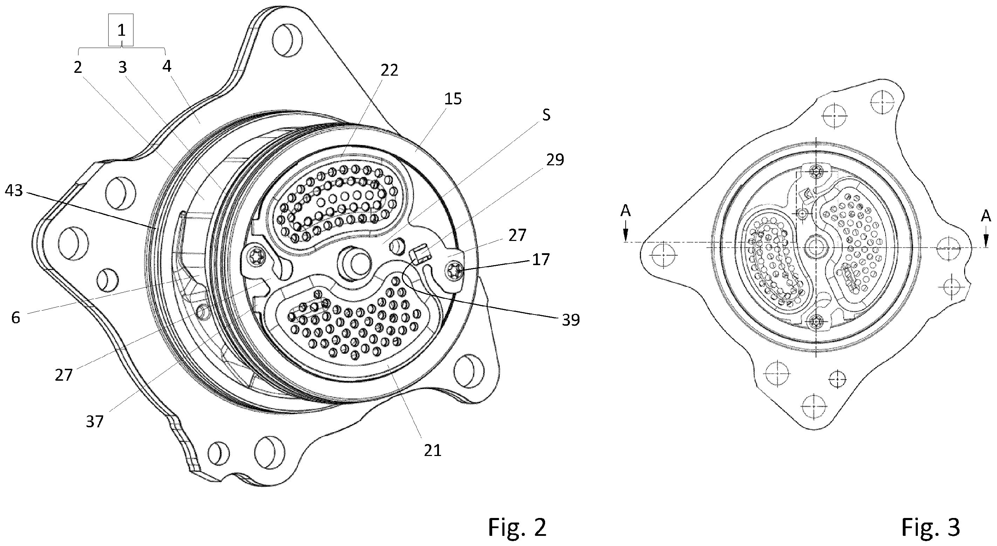

Figur 2 zeigt die Pumpe in einem vormontierten Zustand in einer Isometrie mit Sicht auf eine stirnseitige Auslassseite der Pumpe. Die Auslassseite ist an einer äußeren Stirnseite der in Figur 1 nicht dargestellten, aber in Figur 2 erkennbaren ersten Gehäuse-Stirnwand 3 gebildet. An der äußeren Stirnseite der Gehäuse-Stirnwand 3 sind eine Sickendichtung S und eine Tellerfeder 15 angeordnet. Der erste Auslass und der zweite Auslass münden an der äußeren Stirnseite der Gehäuse-Stirnwand 3. Die Sickendichtung S verdeckt diese Druckauslässe. Die in Figur 1 erkennbaren Verbindungskanäle 8' und 9' sind den Druckauslässen zugeordnet, wobei der Verbindungskanal 8' in den durch die Gehäuse-Stirnwand 3 führenden ersten Auslass und der Verbindungskanal 9' in den ebenfalls durch die Gehäuse-Stirnwand 3 führenden zweiten Auslass münden.

Die Sickendichtung S weist mehrere Sickenschleifen auf, die um Innenbereiche der Sickendichtung S verlaufen. Die Innenbereiche sind vom Fluid durchströmbar und werden radial außen von den Sickenschleifen begrenzt. In Figur 2 sind eine Sickenschleife 21 und eine Sickenschleife 22 erkennbar. Die Sickenschleife 21 umgibt einen Innenbereich der Sickendichtung S, der dem ersten Auslass axial gegenüber liegt und mit diesem in axialer Sicht überlappt. Die Sickenschleife 22 umgibt einen weiteren Innenbereich der Sickendichtung S, der dem zweiten Auslass axial gegenüberliegt und in axialer Sicht mit diesem überlappt.

Die Sickendichtung S ist mehrlagig, im Ausführungsbeispiel zweilagig. Ihre beiden Dichtungslagen sind über einen oder mehrere Faltabschnitte 37 miteinander verbunden. Eine der Dichtungslagen weist ein Halteelement 29 und die andere Dichtungslage weist ein Haltegegenelement 39 auf, die miteinander in einem Halteeingriff sind und im Halteeingriff einem Auseinanderklaffen der Dichtungslagen entgegenwirken.

Die Wandstrukturen des Pumpengehäuses 1, nämlich die Gehäuse-Umfangswand 2, die erste Gehäuse-Stirnwand 3 und die zweite Gehäuse-Stirnwand 4, begrenzen gemeinsam die Förderkammer 5 (Figur 1) über ihren Umfang und axial an ihren Stirnseiten. Die Gehäuse-Stirnwände 3 und 4 liegen jeweils mit Axialkontakt an der Gehäuse-Umfangswand 2 an. Die Gehäuse-Umfangswand 2 kann mit den Stirnwänden 3 und 4 vorteilhafterweise lose, d. h. ohne Stoffschluss, gefügt sein.

Die Gehäuse-Umfangswand 2 und die Gehäuse-Stirnwände 3 und 4 werden innerhalb der vormontierten Pumpeneinheit mittels einer Positionier- und Halteeinrichtung in einem axialen Schichtverbund zusammengehalten. Die Positionier- und Halteeinrichtung umfasst ein erstes Positionierelement 16 und ein zweites Positionierelement 16, die in Figur 1 erkennbar sind. Grundsätzlich würde auch ein einziges, in diesem Fall bevorzugt zentrales Positionierelement 16 genügen. Das jeweilige Positionierelement 16 ragt stabförmig in axialer Richtung von der zweiten Gehäuse-Stirnwand 4 vor, durchragt die Gehäuse-Umfangswand 2 in axialer Richtung und durchragt auch die erste Gehäuse-Stirnwand 3. Bei der Vormontage werden die Gehäuse-Umfangswand 2 und die erste Gehäuse-Stirnwand 3 längs der Positionierelemente 16 in Richtung auf die Gehäuse-Stirnwand 4 geschoben.

Die Sickendichtung S wird mittels der Positionier- und Halteeinrichtung am Pumpengehäuse 1 gehalten. Die Sickendichtung S weist einen zentralen Durchgang auf, der bei der Vormontage auf eine axiale Abragung an der äußeren Stirnseite der Gehäuse-Stirnwand 3 geschoben wird. Hierdurch wird die Sickendichtung S bei ihrer Montage zentriert. Die Sickendichtung S wird mittels Schraubverbindung und/oder Clipverbindung und/oder einer Fügeverbindung vergleichbarer Art am Pumpengehäuse 1 gehalten. Die Positionier- und Halteeinrichtung umfasst hierzu ein oder mehrere Fügeelemente 17, wie etwa eine oder mehrere Schrauben und/oder ein oder mehrere Clipelemente. Die Sickendichtung S weist laschenförmige Befestigungsstrukturen 28 auf, die am Außenumfang der Sickendichtung S vorragen und von Durchgängen für die Fügeelemente 17 durchsetzt werden. Das oder die Fügeelemente 17 ist oder sind mit dem oder den Positionierelementen 16 im Fügeeingriff und halten dadurch die Gehäusewände 2, 3 und 4 und die Sickendichtung S als vormontierte Pumpeneinheit zusammen.

Die Tellerfeder 15 wird im vormontierten Zustand ebenfalls an der äußeren Stirnseite der Gehäuse-Stirnwand 3 gehalten. Sie kann insbesondere mittels der Sickendichtung S gehalten werden. Die Sickendichtung S kann die Tellerfeder 15 axial hintergreifen, so dass sich die Tellerfeder 15 mit ihrem inneren Umfang zumindest bereichsweise, vorzugsweise nur bereichsweise, also nur lokal, in einem zwischen der Gehäuse-Stirnwand 3 und der Sickendichtung S verbleibenden Axialspalt erstreckt und auf diese Weise lose zwischen der Gehäuse-Stirnwand 3 und der Sickendichtung S gehalten wird. Das mittels der Halteeinrichtung 16, 17 als Schichtverbund zusammengehaltene Pumpengehäuse 1 bildet mit der Tellerfeder 15 und der Sickendichtung S die vormontierte Pumpeneinheit in Form einer einfach im Ganzen zu montierenden Montageeinheit.

Die Tellerfeder 15 ist dafür eingerichtet, dass sie im montierten Zustand der Pumpe eine axiale Federkraft auf das Pumpengehäuse 1 ausübt, um die Gehäuse-Stirnwände 3 und 4 axial gegen die Gehäuse-Umfangswand 2 zu drücken und dadurch die Förderkammer 5 dicht zu halten. Zusätzlich kann die Tellerfeder 15 dazu dienen, die Auslässe von der Niederdruckseite der Pumpe zu trennen. Sie kann eine Axialdichtung zusätzlich zur Sickendichtung S bilden.

Figur 3 ist eine Draufsicht auf die Pumpenstirnseite, an der die Sickendichtung S angeordnet ist. Eingezeichnet ist der Verlauf eines Längsschnitts A-A. Der Längsschnitt A-A erstreckt sich in Figur 3 in gerader Linie von links in Richtung auf den zentralen Bereich, wobei er in der Verlängerung die Drehachse R in einem geringen Abstand kreuzt. Im zentralen Bereich springt der Längsschnitt A-A auf die Höhe eines der Positionierelemente 16 bzw. Fügeelemente 17, schneidet dieselben und springt danach zurück in den zentralen Bereich, jetzt genau auf die Höhe der Drehachse R, und erstreckt sich vom Rücksprung aus in gerader Linie weiter nach rechts durch die Pumpe.

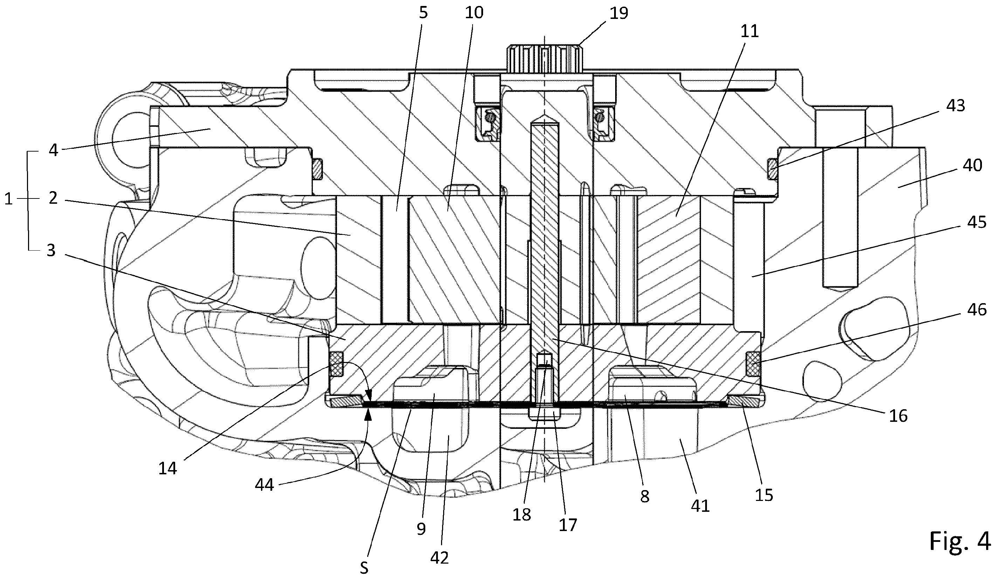

Figur 4 zeigt die Pumpe im Längsschnitt A-A der Figur 3, allerdings im montierten Zustand. Die Pumpe ist an einer Aufnahmeeinrichtung 40 angeordnet. Die Anordnung ist derart, dass die Pumpe mit der Tellerfeder 15 und der Sickendichtung S voran in einen Aufnahmeschacht der Aufnahmeeinrichtung 40 ragt. Die Pumpe liegt mit dem Montageflansch der Gehäuse-Stirnwand 4 an der Aufnahmeeinrichtung 40 an und ist im Bereich des Flansches an der Aufnahmeeinrichtung 40 befestigt, beispielsweise mittels Schraubverbindung.

Die Pumpe ragt mit ihrer Anschlussseite voran in die Aufnahmeeinrichtung 40. Eine äußere Gehäuse-Stirnfläche 14 der Gehäuse-Stirnwand 3 liegt einer Aufnahme-Stirnfläche 44 am Boden des Aufnahmeschachts der Aufnahmeeinrichtung 40 in einem geringen axialen Abstand, d. h. über einen axialen Spalt, gegenüber.

Am äußeren Umfang des Pumpengehäuses 1 ist ein Niederdruckraum 45 gebildet, den radial außen ein Innenumfang der Aufnahmeeinrichtung 40, an einem Stirnende die Radialdichtung 43 und am anderen axialen Ende eine weitere Radialdichtung 46 begrenzen. Im Pumpenbetrieb gelangt das Fluid über den Niederdruckraum 45 und die im Niederdruckraum 45 mündenden Einlässe 6 und 7 (Figuren 1 und 2) in die Förderkammer 5. Die Niederdruckseite der Pumpe umfasst den Niederdruckraum 45, die Einlässe 6 und 7 und die Niederdruckseite der Förderkammer 5.

An der Aufnahme-Stirnfläche 44 münden auf der Hochdruckseite der Pumpe ein erster Druckanschluss 41 und ein zweiter Druckanschluss 42, über die das Fluid in axialer Richtung abförderbar ist. Wie anhand der Figur 1 bereits erläutert, wird das Fluid im Bereich der ersten Arbeitsflut über einen durch die Gehäuse-Stirnwand 3 führenden ersten Auslass 8 und im Bereich der zweiten Arbeitsflut über einen ebenfalls durch die Gehäuse-Stirnwand 3 führenden zweiten Auslass 9 abgefördert. Die in Figur 1 erkennbaren Verbindungskanäle 8' und 9' münden in die zugeordneten Druckauslässe, der Verbindungskanal 8' in den ersten Auslass 8 und der Verbindungskanal 9' in den zweiten Auslass 9. Die Druckauslässe 8 und 9 erstrecken sich durch die Gehäuse-Stirnwand 3 und münden an deren äußeren Gehäuse-Stirnfläche 14 jeweils in einer Vertiefung der Gehäuse-Stirnwand 3. Diese Vertiefungen sind in Figur 3 erkennbar und werden hier ebenfalls als erster Auslass 8 und zweiter Auslass 9 bezeichnet. Der erste Auslass 8 der Pumpe liegt dem ersten Druckanschluss 41 axial gegenüber. Der zweite Auslass 9 der Pumpe liegt dem zweiten Druckanschluss 42 gegenüber. Im Pumpenbetrieb wird das Fluid der ersten Arbeitsflut über den ersten Auslass 8 und den ersten Druckanschluss 41 abgefördert. Das Fluid der zweiten Arbeitsflut wird über den zweiten Auslass 9 und den zweiten Druckanschluss 42 abgefördert.

Die Sickendichtung S ist in dem zwischen der Gehäuse-Stirnfläche 14 und der Aufnahme-Stirnfläche 44 verbleibenden axialen Spalt angeordnet und trennt den ersten Auslass 8 und ersten Druckanschluss 41 vom zweiten Auslass 9 und zweiten Druckanschluss 42.

Erkennbar sind auch eines der Positionierelemente 16 und die Befestigung der Sickendichtung S mittels des Positionierelements 16. Die Verhältnisse sind beim anderen Positionierelement 16 die gleichen. Das Positionierelement 16 weist an seinem der Sickendichtung S zugewandten Stirnende eine axiale Vertiefung 18 auf, wie beispielsweise eine Sackbohrung. Das Fügeelement 17 ragt in Bezug auf die Gehäuse-Stirnwand 3 von außen im Bereich einer der Befestigungsstrukturen 28 (Figur 2) durch die Sickendichtung S und in die Vertiefung 18, wo es mit dem Positionierelement 16 in einem Fügeeingriff ist. Beispielhaft sind das Fügeelement 17 als Befestigungsschraube und die Fügeverbindung als Schraubverbindung verwirklicht.

Die Tellerfeder 15 stützt sich im montierten Zustand der Pumpe axial an der Aufnahme-Stirnfläche 44 ab und wirkt mit ihrer Federkraft axial auf die äußere Gehäuse-Stirnfläche 14. Die Tellerfeder 15 drückt in dieser Weise mit Federkraft die Gehäuse-Stirnwand 3 gegen die Gehäuse-Umfangswand 2 und diese gegen die Gehäuse-Stirnwand 4, wodurch ein axial dichter und fester Verbund der Stirnwände 3 und 4 und der Gehäuse-Umfangswand 2 erhalten und die Dichtheit der Förderkammer 5 gewährleistet wird.

Wie bevorzugt, aber nur beispielhaft, ist die Tellerfeder 15 im Bereich eines inneren Umfangs mit der Gehäuse-Stirnfläche 14 und im Bereich eines äußeren Umfangs mit der Aufnahme-Stirnfläche 44 in Kontakt. Die Sickendichtung S kann die Tellerfeder 15 somit an ihrem der Aufnahme-Stirnfläche 44 axial zugewandten inneren Umfang hintergreifen und im vormontierten Zustand (Figur 2) am Pumpengehäuse 1 halten.

Die Tellerfeder 15 umgibt den Auslass 8 und auch den Auslass 9 in einem einzigen, kontinuierlich und vollständig umlaufenden, in sich geschlossenen Bogen. Sie kann zu einer zusätzlichen Axialdichtung weitergebildet sein und den ersten Auslass 8 und den zweiten Auslass 9 von der Niederdruckseite der Pumpe trennen, im Ausführungsbeispiel insbesondere vom Niederdruckraum 45. Sie kann die Radialdichtung 46 ersetzen und in derartiger Weiterbildung von der Hochdruckseite aus gesehen die der Niederdruckseite nächste Dichtung sein. Sie kann aber auch zu einer Axialdichtung weitergebildet und zusätzlich zur Radialdichtung 46 vorgesehen sein und diese in der Abdichtung der Hochdruckseite gegen die Niederdruckseite unterstützen. Voraussetzung ist allerdings, dass sich die Tellerfeder 15 im montierten Zustand der Pumpe nach beiden axialen Seiten über den Spalt an kontinuierlich rundum unterbrechungsfrei erstreckten Stirnwänden abstützt.

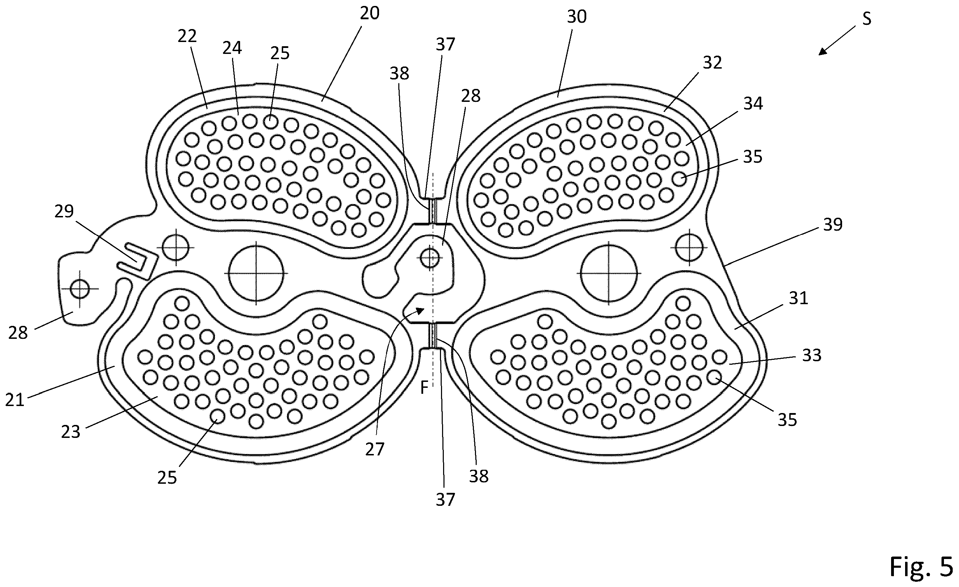

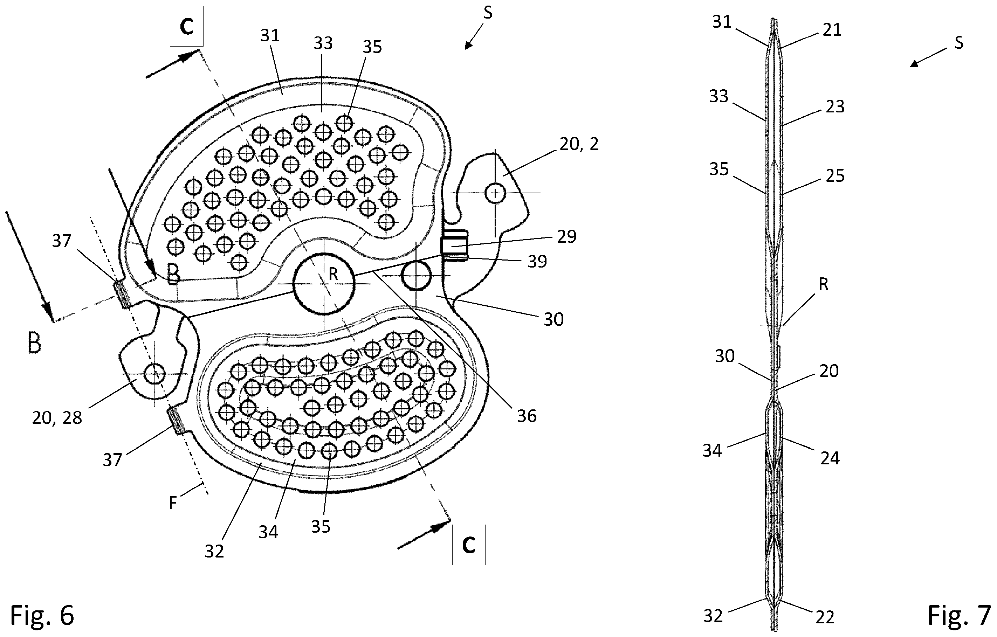

Die Figuren 5, 6 und 7 zeigen die Sickendichtung S jeweils als solche, im nicht montierten Zustand. In Figur 5 ist eine Abwicklung der Sickendichtung S in axialer Draufsicht dargestellt. Die Figuren 6 und 7 zeigen die Sickendichtung S im gefalteten und gegen Klaffen gesicherten Zustand. Figur 6 ist eine Draufsicht auf die Stirnseite der Sickendichtung S, die der Gehäuse-Stirnwand 3 axial zugewandt ist. Figur 7 ist der in Figur 6 eingetragene Längsschnitt C-C.

Die Sickendichtung S ist einem Stück geformt. Sie umfasst eine erste Dichtungslage 20, eine zweite Dichtungslage 30 und Faltabschnitte 37. In der Abwicklung der Figur 5 liegen die Dichtungslagen 20 und 30 nebeneinander und werden durch genau zwei Faltabschnitte 37 miteinander verbunden. Die Sickendichtung S befindet sich im nicht gefalteten Zustand. In der Draufsicht erstreckt sich eine Faltachse F durch die Faltabschnitte 37. Bei Faltung der Faltabschnitte 37 werden die Dichtungslagen 20 und 30 um die Faltachse F aufeinander zu geschwenkt, bis sie im gefalteten Zustand einander axial gegenüberliegen.

Die Faltabschnitte 37 bilden gemeinsam einen Faltbereich der Sickendichtung S. Vor dem Falten ragen die Dichtungslagen 20 und 30 aus dem Faltbereich flügelförmig voneinander weg. Die Dichtungslagen 20 und 30 sind parallel zur Faltachse F gemessen deutlich breiter als der von den Faltabschnitten 37 gebildete Faltbereich. Die aufgefaltete Sickendichtung S ist im Faltbereich, zwischen den Dichtungslagen 20 und 30, mit einer Aussparung 27 versehen. Die Faltabschnitte 37 sind längs der Faltachse F über die Aussparung 27 hinweg voneinander beabstandet. Die Aussparung 27 verringert somit die Breite der Faltabschnitte 37. Im Ausführungsbeispiel sind die Faltabschnitte 37 jeweils als längs der Faltachse F gemessen schmale Streifen geformt.

Im aufgefalteten Zustand ragt eine der Befestigungsstrukturen 28 zwischen den Faltabschnitten 37 frei in die Aussparung 27 vor. Die betreffende Befestigungsstruktur 28 kann unmittelbar durch Herstellen der Aussparung 27 geformt werden, beispielsweise durch Stanzen. Die andere der Befestigungsstrukturen 28 ragt von einem den Faltabschnitten 37 abgewandten, gegenüberliegenden Umfangsabschnitt der Dichtungslage 20 frei nach außen vor. Die Befestigungsstrukturen 28 weisen jeweils einen Durchgang für jeweils eines der Fügeelemente 17 (Figuren 2 und 4) auf.

Die Sickendichtung S weist ein Halteelement 29 und ein Haltegegenelement 39 auf, die miteinander in einen Halteeingriff bringbar sind. Das Halteelement 29 und das Haltegegenelement 39 liegen sich in der Abwicklung der Figur 5, also vor dem Falten, über die Faltachse F gegenüber, so dass sie beim Falten aufeinander zu geschwenkt werden. Im Halteeingriff wirken sie einem Auseinanderklaffen der Dichtungslagen 20 und 30 entgegen. Das Halteelement 29 ist Bestandteil der ersten Dichtungslage 20. Das Haltegegenelement 39 ist Bestandteil der zweiten Dichtungslage 30. Das Halteelement 29 ragt von einem Wurzelende frei vor und ist biegeelastisch. Es ist als Federzunge gebildet. Das Haltegegenelement 39 wird von einem Randabschnitt am äußeren Umfangsrand der zweiten Dichtungslage 30 gebildet. Das Halteelement 39 beinhaltet einen Abschnitt des freien äußeren Umfangsrands der Dichtungslage 30 und erstreckt sich vom freien äußeren Umfangsrand ein kleines Stück weit in den randnahen Bereich der Dichtungslage 30.

Anstelle der im Ausführungsbeispiel insgesamt zwei Faltabschnitte 37 kann der Faltbereich grundsätzlich auch mehr, vorteilhafterweise jeweils schmale Faltabschnitte vergleichbar den Faltabschnitten 37 aufweisen. In noch einer Abwandlung können die Dichtungslagen 20 und 30 auch nur durch einen einzigen Faltabschnitt miteinander verbunden sein. Die Aufteilung in zwei Faltabschnitte 37 ist jedoch vorteilhaft, um die Faltachse F und in der Folge die Relativposition der Dichtungslagen 20 und 30 im gefalteten Zustand präzise zu definieren. Ein weiterer Vorteil ist, dass eine Befestigungsstruktur 28 durch Bildung der Aussparung 27 zwischen den Faltabschnitten 37 erzeugt werden kann, wodurch im Vergleich zu einer außerhalb des Faltbereichs gelegenen Befestigungsstruktur Material eingespart wird.

Das Halteelement 29 ist in der Draufsicht im Bereich der den Faltabschnitten 37 entfernten Befestigungsstruktur 28 angeordnet. Im Ausführungsbeispiel ist es im Wurzelbereich der Befestigungsstruktur 28 geformt.

Um das Falten zu erleichtern und insbesondere die Faltachse F präzise vorzugeben, sind die Faltabschnitte 37 jeweils mit einer Faltvorformung 38 versehen. Die Faltvorformung 38 kann beispielsweise eine längs der Faltachse F erstreckte Prägung oder Ausbauchung sein.

Die erste Dichtungslage 20 umfasst eine bereits in Figur 2 erkennbare erste Sickenschleife 21, die in axialer Draufsicht einen ersten Innenbereich umgibt. Die Sickenschleife 21 ist in Bezug auf den ersten Innenbereich eine kleinste Sickenschleife, die den ersten Innenbereich in der Draufsicht einschließt, d. h. vollständig umgibt. Die Sickenschleife 21 ist eine Halbsicke.

Die erste Sickenschleife 21 ist im ersten Innenbereich im Vergleich zu herkömmlichen Sickenschleifen versteift. Die Versteifung wird mittels einer ersten Versteifungsstruktur 23 erzielt, die sich vom Innenrand der Sickenschleife 21 umlaufend in den Innenbereich erstreckt. Die Versteifungsstruktur 23 kann als plane, dünne Scheibe oder, wie im Ausführungsbeispiel, als axial flach gewölbte, dünne Schalenstruktur geformt sein. Sie weist eine Mehrzahl nebeneinander angeordneter Durchgänge 25 auf, durch die im Pumpenbetrieb das Fluid strömen kann. Die Versteifungsstruktur 23 erstreckt sich längs des gesamten Innenumfangs der Sickenschleife 21 und steift die Sickenschleife 21 über den gesamten Innenumfang nach radial innen gleichmäßig aus.

Die zweite Dichtungslage 30 umfasst eine zweite Sickenschleife 31, die in der Draufsicht einen zweiten Innenbereich umgibt. Die Sickenschleife 31 bildet in Bezug auf den zweiten Innenbereich eine kleinste Sickenschleife, die in der axialen Sicht den zweiten Innenbereich einschließt, d. h. vollständig umgibt. Die Sickenschleife 31 ist der Sickenschleife 21 vergleichbar nach radial innen, d.h. im zweiten Innenbereich, versteift. Der Versteifung dient eine zweite Versteifungsstruktur 33, die als plane, dünne Scheibe oder, wie im Ausführungsbeispiel, als axial flach gewölbte, dünne Schalenstruktur geformt sein kann. Die zweite Versteifungsstruktur 33 weist der ersten Versteifungsstruktur 23 vergleichbar Durchgänge 35 für das Fluid auf.

Die erste Dichtungslage 20 weist eine bereits in Figur 2 erkennbare weitere, dritte Sickenschleife 22 auf, die in der axialen Draufsicht einen dritten Innenbereich umgibt. Die Sickenschleife 22 bildet in Bezug auf den dritten Innenbereich eine kleinste Sickenschleife, die in der axialen Sicht den dritten Innenbereich einschließt, d. h. vollständig umgibt. Auch die Sickenschleife 22 ist in ihrem Innenbereich versteift. Der Versteifung dient eine dritte Versteifungsstruktur 24, die als plane, dünne Scheibe oder, wie im Ausführungsbeispiel, als axial flach gewölbte, dünne Schalenstruktur geformt sein kann. Die Versteifungsstruktur 24 erstreckt sich gleichmäßig über den gesamten Innenumfang der dritten Sickenschleife 22, um diese über den Innenumfang gleichmäßig nach radial innen auszusteifen. Der ersten Versteifungsstruktur 23 vergleichbar, ist auch die dritte Versteifungsstruktur 24 mit einer Mehrzahl von nebeneinander angeordneten Durchgängen 25 für das von der Pumpe geförderte Fluid versehen.

Die erste Sickenschleife 21 und die dritte Sickenschleife 22 sind in der Draufsicht nebeneinander angeordnet, so dass auch die zugehörigen Innenbereiche nebeneinander und mit Abstand voneinander angeordnet sind. Im Ausführungsbeispiel verlaufen auch die Sickenschleifen 21 und 22 separat in einem Abstand voneinander. Zwischen den Sickenschleifen 21 und 22 befindet sich beispielsweise der zentrale Durchgang der Dichtungslage 20, der im gefalteten Zustand der Zentrierung der Sickendichtung S am Pumpengehäuse 1 dient.

Schließlich umfasst die zweite Dichtungslage 30 eine vierte Sickenschleife 32, die in der Draufsicht einen vierten Innenbereich umgibt. Die Sickenschleife 32 bildet in Bezug auf den vierten Innenbereich eine kleinste Sickenschleife, die in der Draufsicht den vierten Innenbereich einschließt, d. h. vollständig umgibt. Auch die Sickenschleife 32 ist in ihrem Innenbereich versteift. Der Versteifung dient eine vierte Versteifungsstruktur 34, die als plane, dünne Scheibe oder, wie im Ausführungsbeispiel, als axial flach gewölbte, dünne Schalenstruktur geformt sein kann. Die Versteifungsstruktur 34 erstreckt sich gleichmäßig über den gesamten Innenumfang der vierten Sickenschleife 32, um diese über den Innenumfang gleichmäßig nach radial innen auszusteifen. Der ersten Versteifungsstruktur 23 vergleichbar, ist auch die vierte Versteifungsstruktur 34 mit einer Mehrzahl von nebeneinander angeordneten Durchgängen 35 für das von der Pumpe geförderte Fluid versehen.

Die zweite Sickenschleife 31 und die vierte Sickenschleife 32 sind in der Draufsicht nebeneinander angeordnet, so dass auch die zugehörigen Innenbereiche nebeneinander und mit Abstand voneinander angeordnet sind. Im Ausführungsbeispiel verlaufen auch die Sickenschleifen 31 und 32 separat in einem Abstand voneinander. Zwischen den Sickenschleifen 31 und 32 befindet sich beispielsweise der zentrale Durchgang der Dichtungslage 30, der nach Faltung der Zentrierung der Sickendichtung S am Pumpengehäuse 1 dient.

Im gefalteten Zustand überlappen in der axialen Draufsicht die erste Sickenschleife 21 und die zweite Sickenschleife 31 über ihren gesamten Verlauf, so dass die von den Sickenschleifen 21 und 31 umgebenen Innenbereiche einander zumindest im Wesentlichen vollständig überlappen. Die zweite Sickenschleife 31 ist der ersten Sickenschleife 21 entsprechend als Halbsicke geformt. Die Sickenschleifen 21 und 31 spreizen sich von ihrem Außenumfang ausgehend zum gemeinsamen ersten Innenbereich hin in axialer Richtung voneinander weg, wodurch der axiale Federweg der Sickendichtung S im Bereich der Sickenschleifen 21 und 31 im Vergleich zu der jeweiligen Einzelsicke 21 und 31 vergrößert wird. Die Vergrößerung des axialen Federwegs ist im Hinblick auf die gewünschte Kompensation von Variationen der axialen Weite des abzudichtenden Spalts vorteilhaft.

Im gefalteten Zustand überlappen in der axialen Draufsicht auch die dritte Sickenschleife 22 und die vierte Sickenschleife 32 über ihren gesamten Verlauf, so dass die von den Sickenschleifen 22 und 32 umgebenen Innenbereiche einander zumindest im Wesentlichen vollständig überlappen. Die Sickenschleifen 22 und 32 sind ebenfalls als Halbsicken geformt. Die Sickenschleifen 22 und 32 spreizen sich von ihrem Außenumfang ausgehend zum gemeinsamen zweiten Innenbereich hin in axialer Richtung voneinander weg, wodurch der axiale Federweg der Sickendichtung S im Bereich der Sickenschleifen 22 und 32 im Vergleich zu der jeweiligen Einzelsicke 22 und 32 vergrößert wird. Die Vergrößerung des axialen Federwegs ist im Hinblick auf die gewünschte Kompensation von Variationen der axialen Weite des abzudichtenden Spalts vorteilhaft.

Die Sickenschleifen 21 und 31 einerseits und/oder die Sickenschleifen 22 und 32 andererseits können im nicht gefalteten Zustand insbesondere spiegelsymmetrisch in Bezug auf die Faltachse F sein, so dass sie im gefalteten und im Halteeingriff gesicherten Zustand der Sickendichtung S über ihren gesamten Verlauf axial fluchten.

Die Versteifungsstrukturen 23, 24, 33 und 34 sind in weiterer Funktion auch Widerstandsstrukturen. Im Ausführungsbeispiel sind sie jeweils mit vielen kleinen Durchgängen 25 und 35, beispielsweise Durchgangslöchern, perforiert. Die Versteifungsstrukturen 23, 24, 33 und 34 bilden jeweils einen Strömungswiderstand für das zu fördernde Fluid. Durch den Strömungswiderstand wird sichergestellt, dass die Flügel 12 des Förderglieds 10 (Figur 1) bei einem Anfahren der Pumpe, insbesondere im kalten Zustand und entsprechend zähem Fluid, nach radial außen gedrückt werden. Um diesen Effekt zu erzielen, werden die Flügel 12 an ihren Unterseiten, im sogenannten Unterflügelbereich, mit dem von der Pumpe geförderten Fluid beaufschlagt. Die Versteifungsstrukturen 23, 24, 33 und 34 dienen dazu, die Versorgung des Unterflügelbereichs mit Druckfluid zu gewährleisten.

Die Sickendichtung S ist eine Blechstruktur. Insbesondere kann es sich um eine Stahlblechstruktur und bevorzugt um eine Federstahlstruktur handeln. Grundsätzlich kann die Sickendichtung S aber auch eine Kunststoffstruktur sein, beispielsweise eine Organoblechstruktur. Stahlblech und insbesondere Federstahlblech wird jedoch der Vorzug gegeben. Die Dichtungslage 20 und/oder die Dichtungslage 30 kann oder können jeweils mit einem elastomeren Dichtungsmaterial beschichtet sein, vorteilhafterweise kann jedoch auf eine Beschichtung verzichtet werden und die Sickendichtung rein als Metallsickendichtung ausgeführt sein.

Die Sickendichtung S ist am Einbauort vorteilhafterweise mit einer axialen Vorspannkraft eingebaut. Die Vorspannkraft ist zweckmäßigerweise so gewählt, dass sie unter allen Einbaubedingungen, d. h. in Bezug auf die unvermeidlichen Bauteil- und Einbautoleranzen und darüber hinaus auch in Bezug auf die mit Temperatur- und/oder Druckänderungen einhergehenden Variationen der axialen Weite des Spalts eine für die Dichtigkeit ausreichende Federkraft gewährleistet.

In vorteilhaften Ausführungen ist die Sickendichtung S hinsichtlich der zusammenwirkenden Paare von Sickenschleifen 21 und 31 sowie 22 und 32 so ausgelegt, dass sie Variationen der axialen Spaltweite von wenigstens 0,1 mm oder wenigstens 0,2 mm, vorzugsweise von 0,3 mm oder mehr, ausgleichen kann und über den jeweiligen Variationsbereich der axialen Spaltweite eine ausreichende Abdichtung gewährleistet.

Die Sickendichtung S ist in einem Kraftnebenschluss zur Tellerfeder 15 angeordnet (Figur 4). Die Tellerfeder 15 nimmt den überwiegenden Teil der bei Verringerung der Spaltweite über den Spalt wirkenden Axialkraft auf. Die Tellerfeder 15 ist dementsprechend so ausgelegt, dass sie Variationen der axialen Spaltweite von wenigstens 0,1 mm oder wenigstens 0,2 mm, vorzugsweise von 0,3 mm oder mehr, ausgleichen kann und über den jeweiligen Variationsbereich der axialen Spaltweite den überwiegenden Teil der über die Fuge wirkende Axialkraft elastisch aufnimmt, optional auch eine Abdichtung zum Niederdruckraum 45 schafft.

Figur 6 zeigt die Sickendichtung S im gefalteten Zustand, bereit für die Montage am Pumpengehäuse 1 (Figur 2). Die Dichtungslagen 20 und 30 sind um die Faltachse F gefaltet und liegen übereinander, im Ausführungsbeispiel wie bevorzugt aufeinander. Das Halteelement 29 und das Haltegegenelement 39 sind miteinander im Halteeingriff. Figur 6 zeigt die gefaltete Sickendichtung S in axialer Draufsicht auf die Dichtungslage 30, die in der vormontierten Pumpeneinheit, wie Figur 2 sie zeigt, der Gehäuse-Stirnwand 3 zugewandt ist. Im Halteeingriff hintergreift das Halteelement 29 in Bezug auf die axiale Richtung das Haltegegenelement 39. In der Draufsicht der Figur 6 wird der zum Haltegegenelement 39 gehörende freie äußere Umfangsrand der Dichtungslage 30 daher vom Halteelement 29 verdeckt.

Der Halteeingriff liegt dem Faltbereich über einen zentralen Bereich der gefalteten Sickendichtung S gegenüber. Eine zur Faltachse F orthogonale Schnittebene erstreckt sich zwischen den Faltabschnitten 37 und durch den Halteeingriff. Denkt man sich zwei Geraden, die sich in der Draufsicht auf die gefaltete Sickendichtung schneiden und die Sickendichtung S in vier Sektoren unterteilen, so dass sich jeder Faltabschnitt 37 vollständig in einem ersten Sektor erstreckt und jeder Halteeingriff in der Draufsicht in einem zweiten Sektor gebildet ist, wobei sich der erste Sektor und der zweite Sektor über den Schnittpunkt der Geraden spiegelbildlich gegenüberliegen, dann ist es grundsätzlich vorteilhaft, wenn sich diese zwei Sektoren jeweils über einen Sektorenwinkel von höchstens 90° oder höchstens 60° erstrecken.

Um über den äußeren Umfangsrand der aneinander liegenden Dichtungslagen 20 und 30 einen gleichmäßigen Kontakt zu erhalten, sind die Dichtungslagen 20 und 30 jeweils so vorgeformt, dass sie im bereits gefalteten Zustand, noch vor Herstellung des Halteeingriffs bis zum jeweiligen äußeren Umfangsrand zueinander konkav sind. Die Konkavität wird im Ausführungsbeispiel dadurch erzielt, dass die Dichtungslagen 20 und 30 jeweils einen im zentralen Bereich erstreckten Knick aufweisen. In der Draufsicht der Figur 6 ist der Knick 36 der Dichtungslage 30 als eine die Dichtungslage 30 durchziehende, gerade Knicklinie erkennbar. Der Knick 36 und der Knick der anderen Dichtungslage 20 erstrecken sich jeweils in etwa orthogonal zur Faltachse F. Der Verlauf ist so gewählt, dass sich der jeweilige Knick zum einen durch den zentralen Bereich der Sickendichtung S von Umfangsrand zu Umfangsrand, aber nur außerhalb der Sickenschleifen, in Figure 6 außerhalb der Sickenschleifen 31 und 32, erstreckt. In Schnittebenen, die sich parallel zur Faltachse F in axialer Richtung aus der Draufsichtebene erstrecken, bilden die Dichtungslagen 20 und 30 im gefalteten, aber noch nicht gesicherten Zustand eine sehr flache Raute, wobei sich die Dichtungslagen 20 und 30 am äußeren Umfangsrand noch nicht berühren oder zumindest axial nicht gegeneinander gespannt sind.

Figur 7 zeigt die Sickendichtung S im Längsschnitt C-C der Figur 6. In Figur 7 ist insbesondere der durch die Mehrlagigkeit erhaltene, im Vergleich zu einlagigen Ausführungen längere axiale Federweg der Sickendichtung S erkennbar. Erkennbar ist auch, dass die Versteifungsstrukturen 24 und 34 relativ zueinander konvex sind, so dass ihr axialer Abstand in einem zentralen Bereich innerhalb der Sickenschleifen 22 und 32 verringert ist. Im Ausführungsbeispiel liegen die Versteifungsstrukturen 24 und 34 im zentralen Bereich axial aneinander.

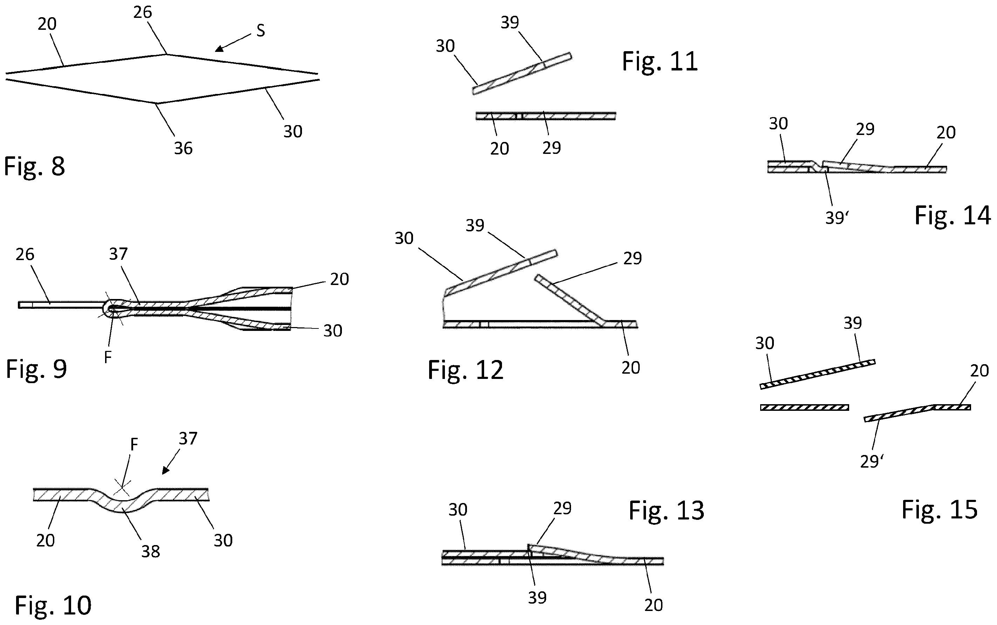

Figur 8 zeigt die Sickendichtung S rein schematisch in einer axialen Schnittebene, die zur Faltachse F parallel ist. Die Sickendichtung S befindet sich im gefalteten Zustand. Die Dichtungslagen 20 und 30 liegen sich axial zugewandt gegenüber, der Halteeingriff ist noch nicht hergestellt und auf die Dichtungslagen 20 und 30 wirken keine äußeren Kräfte. In diesem unbelasteten Zustand sind beide Dichtungslagen 20 und 30 relativ zueinander konkav vorgeformt. Die Vorformung besteht darin, dass die Dichtungslagen 20 und 30 jeweils einen kleinen Knick 26 und 36 im zentralen Bereich aufweisen und aus dem zentralen Bereich, vom jeweiligen Knick 26 und 36 nach außen fortschreitend bis zum äußeren Umfangsrand unter einem spitzen Winkel aufeinander zulaufen. Lässt man die geformten Sickenschleifen außer Betracht, wie in der schematischen Darstellung der Figur 8, dann bilden die Dichtungslagen 20 und 30 miteinander eine flache Raute, die in Figur 8 allerdings überzeichnet ist. An der Sickendichtung S im aufgefalteten Zustand (Figur 5) ist die im Ganzen dachartige Form kaum erkennbar. Der jeweilige Knick 26 und 36 ist jedoch in der jeweiligen Draufsicht als feine Knicklinie erkennbar. In Figur 5 sind die Knicklinien 26 und 36 jedoch nicht eingezeichnet. Sie können in der Abwicklung der Sickendichtung eine einzige gerade Linie bilden, die sich durch den zentralen Bereich und stets zwischen den Sickenschleifen erstreckt. Die Knicke 26 und 36 können aber auch bei aufgefalteten Dichtungslagen 20 und 30 in der Draufsicht einen gewissen Versatz zueinander aufweisen oder unter einem stumpfen Winkel zueinander weisen, sollte es beispielsweise nur dann möglich sein, dass die Knicke 26 und 36 außerhalb der Sickenschleifen verlaufen.

Aufgrund der konkaven Vorformung werden die Dichtungslagen 20 und 30 bei Herstellung des Halteeingriffs im Bereich der Knicke 26 und 36 aufeinander zu gezogen, so dass sie zunächst am äußeren Umfangsrand in axialen Kontakt gelangen. Die konkave Vorformung wirkt so einem Auseinanderklaffen am äußeren Umfangsrand entgegen.

In den Figuren 9 und 10 ist einer der Faltabschnitte 37 als Detail vergrößert dargestellt. Figur 9 zeigt den betreffenden Faltbereich 37 im gefalteten Zustand im Längsschnitt B-B der Figur 6. Figur 10 zeigt den Faltabschnitt 37 ebenfalls im Längsschnitt, aber vor dem Falten. Wie bereits erwähnt, sind die Faltabschnitte 37 zur präziseren Definition der Faltachse F jeweils mit einer Faltvorformung 38 versehen. Bei der Faltvorformung 38 handelt es sich um eine lokale Ausbauchung, die beim Tiefziehen im Formungsprozess der Sickenschleifen 21, 22, 31 und 32 mitgeformt oder auch in einem vorgelagerten oder einem nachgelagerten Schritt geformt werden kann.

Die Figuren 11, 12 und 13 veranschaulichen die Herstellung des Halteeingriffs von Halteelement 29 und Haltegegenelement 39 in Form einer von Figur 11 über Figur 12 zur Figur 13 vorschreitenden Sequenz.

Figur 11 zeigt einen Ausgangszustand in Bezug auf die Herstellung des Halteeingriffs. Die Dichtungslagen 20 und 30 sind bereits gefaltet. Das als Federzunge gebildete Halteelement 29 befindet sich im unbelasteten Zustand, in dem es sich plan in seiner unmittelbaren Umgebung der Dichtungslage 20 erstreckt. Die Dichtungslage 30 wird im Bereich des Haltegegenelements 39 in axialer Richtung auf Abstand zum Halteelement 29 gehalten oder klafft dort am Umfangsrand von Hause aus von der Dichtungslage 20 weg.

Figur 12 zeigt in der Sequenz einen nächsten Schritt, in dem das Halteelement 29 mit einem beispielsweise stiftförmigen Werkzeug eines Montageautomaten in Richtung auf das Haltegegenelement 39 und an dessen freiem Ende, dem äußeren Umfangsrand der Dichtungslage 30, vorbei aus seiner Dichtungslage 20 abgebogen wird, so dass es den Weg für das Haltegegenelement 39 freigibt und die Dichtungslage 30 mithilfe eines weiteren Werkzeugs im Bereich des Haltegegenelements 39 in Richtung auf die Dichtungslage 20 gedrückt werden kann. Wird das Halteelement 29 nun entlastet, schnappt es elastisch zurück und drückt das Haltegegenelement 39 mit einer auf Elastizität beruhenden Spannkraft axial gegen die Dichtungslage 20.

Figur 13 zeigt die Dichtungslagen 20 und 30 in der unmittelbaren Umgebung von Halteelement 29 und Haltegegenelement 39. Das Haltegegenelement 39 liegt mit seinem freien Ende, dem freien äußeren Umfangsrand der Dichtungslage 30, von der Dichtungslage 20 aus gesehen unter dem freien Ende des Halteelements 29. In diesem Hintergriff hält das Halteelement 29 über das Haltegegenelement 39 die Dichtungslage 30 an der Dichtungslage 20. Einem Auseinanderklaffen der Dichtungslagen 20 und 30 wird entgegengewirkt. Das Halteelement 29 drückt seiner elastischen Verformung entsprechend im Halteeingriff auf das Haltegegenelement 39.

Figur 14 zeigt die Dichtungslagen 20 und 30 in der unmittelbaren Umgebung des Halteeingriffs. Die Dichtungslage 30 ist in Bezug auf ihr Haltegegenelement modifiziert. Das modifizierte Haltegegenelement ist mit 39' bezeichnet. Das modifizierte Haltegegenelement 39' ist gekröpft, so dass es sich mit seinem freien Ende in der Lagenebene der ersten Dichtungslage 20 erstreckt, wenn es sich im Halteeingriff befindet. Die zweite Dichtungslage 30 knickt zu diesem Zweck im Bereich eines dem Halteelement 29 gegenüberliegenden Randabschnitts der Dichtungslage 20 in Richtung auf die Dichtungslage 20 ab und knickt auf der axialen Höhe der Dichtungslage 20 wieder zurück, so dass das Haltegegenelement 39' in Form eines treppenstufenförmigen Profils erhalten wird. Ist das Halteelement 29, wie im Ausführungsbeispiel im unbelasteten Zustand plan, kann sein freies Ende im Halteeingriff ein kleines Stück über die zweite Dichtungslage 30 vorragen. Um ein derartiges Vorstehen zu verringern, kann in noch einer Weiterentwicklung auch das Halteelement 29 gekröpft oder rund gebogen sein, so dass es im Bereich seines freien Endes im Halteeingriff flächig auf dem Haltegegenelement 39' liegt.

Figur 15 zeigt die Dichtungslagen 20 und 30 in der unmittelbaren Umgebung des Halteeingriffs, wobei die Dichtungslage 20 ein gegenüber dem Ausführungsbeispiel der Figuren 11 bis 13 modifiziertes Halteelement 29' aufweist. Das Halteelement 29' ragt im unbelasteten Zustand aus der Lagenebene seiner Dichtungslage 20, d.h. aus seiner unmittelbaren Umgebung der Dichtungslage 20, von der anderen Dichtungslage 30 weg vor. Zur Herstellung des Halteeingriffs wird das Halteelement 29' mit einem Werkzeug wie zum Ausführungsbeispiel der Figuren 11 bis 13 beschrieben in Richtung auf das Haltegegenelement 39 zu und unter diesem hindurch abgebogen. Allerdings ist der zum Abbiegen erforderliche Umformgrad beim modifizierten Halteelement 29' größer als beim Halteelement 29. In der Folge wirkt es im Halteeingriff mit einer größeren axialen Spannkraft auf das Haltegegenelement 39.

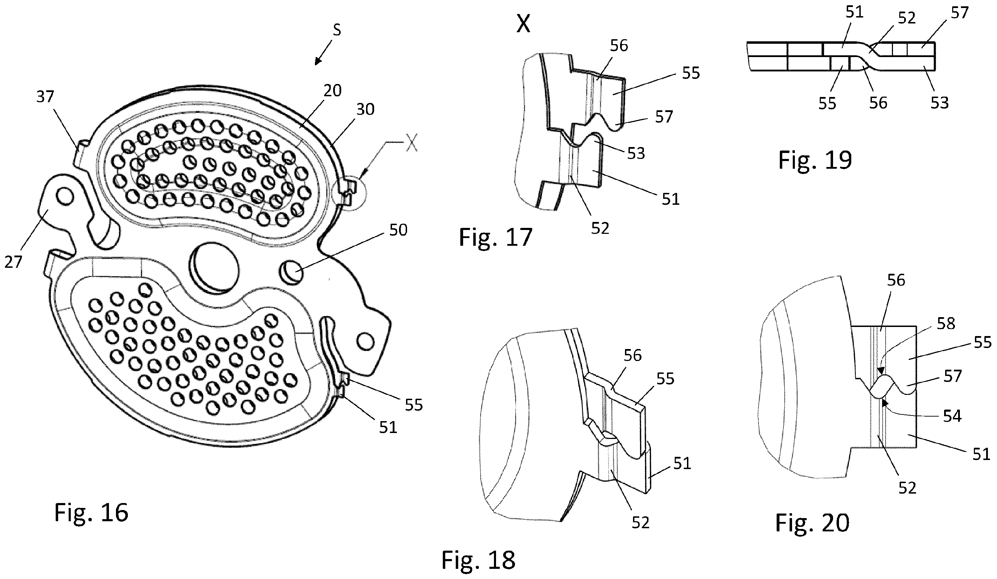

Figur 16 zeigt eine Sickendichtung S eines zweiten Ausführungsbeispiels in einer Isometrie mit Blick auf die Dichtungslage 20. Die Sickendichtung S befindet sich im gefalteten, noch nicht gesicherten Zustand. Der Faltprozess als solcher ist beendet und die Dichtungslagen 20 und 30 liegen einander axial gegenüber, klaffen aber im Bereich des äußeren Umfangsrands, der dem Faltbereich gegenüber liegt, noch ein klein wenig auseinander. Die Sickendichtung S des zweiten Ausführungsbeispiels unterscheidet sich vom ersten Ausführungsbeispiel durch die Anzahl und auch die Ausgestaltung der Halteelemente und Haltegegenelemente.

Im Unterschied zum ersten Ausführungsbeispiel weisen die erste Dichtungslage 20 genau zwei Halteelemente 51 und die zweite Dichtungslage 30 entsprechend zwei Haltegegenelemente 55 auf. Die Halteelemente 51 und Haltegegenelemente 55 sind paarweise jeweils in einen Halteeingriff bringbar. Die Halteelemente 51 und die Haltegegenelemente 55 ragen vom äußeren Umfangsrand der jeweiligen Dichtungslage 20 und 30 frei nach außen vor.

In Figur 17 ist ein Paar der Halteelemente 51 und Haltegegenelemente 55 im Detail X der Figur 16 und somit noch vor Herstellung des Halteeingriffs dargestellt. Die Figuren 18, 19 und 20 zeigen das gleiche Paar aus Halteelement 51 und Haltegegenelement 55 im Halteeingriff, wobei Figur 18 eine Perspektive, Figur 19 ein axial erstreckter Schnitt und Figur 20 eine axiale Draufsicht sind.

Die Halteelemente 51 und Haltegegenelemente 55 sind in Bezug auf die axiale Richtung gekröpft. Das jeweilige Haltelement 51 weist eine Abkröpfung 52 und das jeweilige Haltegegenelement 55 weist eine Abkröpfung 56 auf. Über seine Abkröpfung 52 fällt das jeweilige Halteelement 51 vom äußeren Umfangsrand der Dichtungslage 20 in axialer Richtung auf die Höhe des äußeren Umfangsrands der Dichtungslage 30 ab. In die andere axiale Richtung fällt das jeweilige Haltegegenelement 55 über seine Abkröpfung 56 vom äußeren Umfangsrand der Dichtungslage 30 auf die Höhe der Dichtungslage 20 ab. Am besten ist die Form der Abkröpfungen 52 und 56 im Schnitt der Figur 19 erkennbar. Mittels der Abkröpfungen 52 und 56 wird erreicht, dass die Halteelemente 51 und Haltegegenelemente 55 im Halteeingriff die aneinander liegenden Dichtungslagen 20 und 30 nur nach außen verbreitern und die Dicke über alles in der Umgebung des Halteeingriffs nicht vergrößern.

Die Halteelemente 51 weisen jeweils eine Abragung 53 auf, die in Richtung auf das zugeordnete Haltegegenelement 55, mit dem der Halteeingriff zu bilden ist, vorragt. Die Haltegegenelemente 51 weisen jeweils eine Abragung 57 auf, die in Richtung auf das zugeordnete Halteelement 51, mit dem der Halteeingriff zu bilden ist, vorragt. Die Halteelemente 51 und die Haltegegenelemente 55 weisen an ihren einander in Umfangsrichtung zugewandten Seiten jeweils eine Einbuchtung auf, um die Abragungen 53 und 57 zu erhalten. Wie in der Zusammenschau der Figuren 17 bis 20 und insbesondere in Figur 20 erkennbar, liegen die Paare der zusammenwirkenden Halteelemente 51 und Haltegegenelemente 55 jeweils mit der Abragung 53 und der Abragung 57 axial übereinander und drücken mit elastischer Spannkraft gegeneinander, um auf diese Weise die Dichtungslagen 20 und 30 zueinander zu spannen. Grundsätzlich würde es für den Halteeingriff genügen, wenn die Halteelemente 51 und Haltegegenelemente 55 pro Paar nur eine einzige Abragung 53 oder 57 aufwiesen, solange diese im Halteeingriff mit dem jeweils anderen Eingriffspartner überlappt, um axial auf diesen zu wirken.

Die Halteelemente 51 und Haltegegenelemente 55 weisen darüber hinaus Anschlagstellen 54 und 58 auf (Figur 20). Die Anschlagstellen 54 und 58 liegen zwischen dem äußeren Umfangsrand der jeweiligen Dichtungslage 20 und 30 einerseits und der jeweiligen Abragung 53 und 57 andererseits. Die Anschlagstellen 54 und 58 liegen im Bereich der Einbuchtungen.

Um den Halteeingriff herzustellen, werden die aufeinander gefalteten Dichtungslagen 20 und 30 durch leichtes elastisches Verspannen relativ zueinander in Umfangsrichtung so weit versetzt, dass die Halteelemente 51 und Haltegegenelemente 55 in der Draufsicht frei voneinander sind. In diesem Zustand werden die Dichtungslagen 20 und 30 anschließend am äußeren Umfangsrand bei den Halteelementen 51 und Haltegegenelementen 55 aneinandergedrückt und anschließend aneinanderliegend in Bezug auf die Umfangsrichtung entlastet. Die Dichtungslagen 20 und 30 federn in Umfangsrichtung zurück, so dass die Halteelemente 51 und Haltegegenelemente 55 mit ihren Abragungen 53 und 57 paarweise in die Überlappung und dadurch in den Halteeingriff gelangen. Wenn die Überlappung hergestellt ist, können die Dichtungslagen 20 und 30 axial wieder entlastet werden. Um das Verspannen und dadurch Versetzen in Umfangsrichtung zu erleichtern, können die Dichtungslagen 20 und 30 mit jeweils einem Durchgang 50 versehen sein, wobei die Durchgänge im gefalteten Zustand axial fluchten. Zum Verspannen und Versetzen kann ein stabförmiges Werkzeug in die fluchtenden Durchgänge 50 eingeführt und zur axialen Richtung gekippt werden.

Von den beschriebenen Unterschieden abgesehen, entspricht die Sickendichtung S des zweiten Ausführungsbeispiels der Sickendichtung S des ersten Ausführungsbeispiels.

### Bezugszeichen:

- 1: Pumpengehäuse
- 2: Gehäuse-Umfangswand
- 3: Gehäuse-Stirnwand
- 4: Gehäuse-Stirnwand
- 5: Förderkammer
- 6: Einlass
- 7: Einlass
- 8: Auslass
- 8': Verbindungskanal
- 9: Auslass
- 9': Verbindungskanal
- 10: Förderglied
- 11: Rotor
- 12: Flügel
- 13: Antriebswelle
- 14: äußere Gehäuse-Stirnfläche
- 15: Tellerfeder
- 16: Positionierelement
- 17: Fügeelement
- 18: Vertiefung
- 19: Antriebsrad
- 20: Dichtungslage
- 21: Sickenschleife
- 22: Sickenschleife
- 23: Versteifungsstruktur
- 24: Versteifungsstruktur
- 25: Durchgang
- 26: Knick
- 27: Aussparung
- 28: Befestigungsstruktur
- 29: Halteelement
- 29': modifiziertes Halteelement
- 30: Dichtungslage
- 31: Sickenschleife
- 32: Sickenschleife
- 33: Versteifungsstruktur
- 34: Versteifungsstruktur
- 35: Durchgang
- 36: Knick
- 37: Faltabschnitt
- 38: Faltvorformung
- 39: Haltegegenelement
- 39': modifiziertes Haltegegenelement
- 40: Aufnahmeeinrichtung
- 41: Druckanschluss
- 42: Druckanschluss
- 43: Radialdichtung
- 44: Aufnahme-Stirnfläche
- 45: Niederdruckraum
- 46: Radialdichtung
- 47: -
- 48: -
- 49: -
- 50: Durchgang
- 51: Halteelement
- 52: Abkröpfung
- 53: Abragung
- 54: Anschlagstelle
- 55: Haltegegenelement
- 56: Abkröpfung
- 57: Abragung
- 58: Anschlagstelle

- F: Faltachse
- R: Drehachse
- S: Sickendichtung

## Patentansprüche

1. Sickendichtung zum Abdichten eines Spalts zwischen einem ersten Bauteil (1) und einem zweiten Bauteil (40), wobei die Sickendichtung (S) Folgendes umfasst:
(a) eine erste Dichtungslage (20) mit einem Halteelement (29; 51),
(b) eine zweite Dichtungslage (30) mit einem Haltegegenelement (39; 55) und
(c) einen oder mehrere Faltabschnitte (37), der oder die die erste Dichtungslage (20) und die zweite Dichtungslage (30) verbindet oder verbinden,
(d) wobei die erste Dichtungslage (20), die zweite Dichtungslage (30) und der jeweilige Faltabschnitt (37) in einem Stück geformt und die Dichtungslagen (20, 30) durch Umlegen des jeweiligen Faltabschnitts (37) aufeinander gefaltet oder aufeinander faltbar sind, so dass sie einander in einer axialen Richtung zugewandt sind, und
(e) wobei das Halteelement (29; 51) und das Haltegegenelement (39; 55) miteinander in einem auf Form- und/oder Reibschluss beruhenden Halteeingriff oder in den Halteeingriff bringbar sind, um die Dichtungslagen (20, 30) gegen ein Auseinanderklaffen zu sichern,
**dadurch gekennzeichnet, dass**
(f) die Dichtungslagen (20; 30) einschließlich Halteelement (29; 51) und Haltegegenelement (39; 55) über den einen oder die mehreren Faltabschnitte (37) zusammenhängend aus einem Metallblech geformt sind.

2. Sickendichtung nach dem vorhergehenden Anspruch, wobei das Halteelement (29; 51) und das Haltegegenelement (39; 55) einander im Halteeingriff in Bezug auf die axiale Richtung hintergreifen und vorzugsweise mit einer auf elastischer Verformung beruhenden Spannkraft in axialer Richtung gegeneinanderdrücken.

3. Sickendichtung nach einem der vorhergehenden Ansprüche, wobei das Halteelement (29) einen äußeren Umfangsrand der zweiten Dichtungslage (30) oder das Haltegegenelement (39) einen äußeren Umfangsrand der ersten Dichtungslage (20) im Halteeingriff in Bezug auf die axiale Richtung hintergreift.

4. Sickendichtung nach einem der vorhergehenden Ansprüche, wobei das Halteelement (29; 51) und/oder das Haltegegenelement (39; 55) in der Draufsicht von einem Wurzelende aus frei vorragt/vorragen und elastisch aus dem Halteeingriff biegbar ist/sind.

5. Sickendichtung nach einem der vorhergehenden Ansprüche, wobei das Halteelement (51) und/oder das Haltegegenelement (39'; 55) in Richtung auf ein freies Ende rund abgebogen und wieder zurückgebogen oder vorzugsweise gekröpft ist/sind und sich aus einer Lagenebene der zugehörigen Dichtungslage (20, 30) in eine Lagenebene der anderen Dichtungslage (30, 20) erstreckt oder jeweils erstrecken, um die Dicke der Sickendichtung (S) im Bereich des Halteeingriffs gering zu halten.

6. Sickendichtung nach einem der vorhergehenden Ansprüche, wobei sich eine Faltachse (F) der Sickendichtung (S) in einer axialen Draufsicht auf die aufgefaltete Sickendichtung (S) in dem einen oder den mehreren Faltabschnitten (37) quer zur axialen Richtung erstreckt, der jeweilige Faltabschnitt (37) in der Draufsicht längs der Faltachse (F) eine Faltabschnittsbreite und die Sickendichtung (S) parallel zur Faltachse (F) gemessen eine maximale Dichtungsbreite aufweisen, und diese maximale Dichtungsbreite wenigstens dreimal oder wenigstens fünfmal so groß wie die jeweilige Faltabschnittsbreite ist.

7. Sickendichtung nach einem der vorhergehenden Ansprüche, die einen ersten Faltabschnitt (37) und einen zweiten Faltabschnitt (37) umfasst, wobei sich eine Faltachse (F) der Sickendichtung (S) in einer axialen Draufsicht auf die aufgefaltete Sickendichtung (S) in den Faltabschnitten (37) und in einer zwischen den Faltabschnitten (37) gelegenen Aussparung (27) erstreckt, die längs der Faltachse (F) ganz oder nur bereichsweise frei von Material ist.

8. Sickendichtung nach einem der vorhergehenden Ansprüche, wobei sich der jeweilige Faltabschnitt (37) in einer axialen Draufsicht auf die gefaltete Sickendichtung (S) vollständig in einem ersten Sektor erstreckt und der Halteeingriff in der Draufsicht in einem zweiten Sektor gebildet ist, wobei diese Sektoren von zwei in der Draufsicht sich schneidenden Geraden begrenzt werden und sich über den Schnittpunkt der Geraden spiegelbildlich gegenüberliegen und jeweils über einen Sektorenwinkel von höchstens 90° oder höchstens 60° erstrecken.

9. Sickendichtung nach einem der vorhergehenden Ansprüche, wobei die Dichtungslagen (20, 30) bei umgelegtem/n Faltabschnitt(en) (37) vor Herstellung des Halteeingriffs einander axial zugewandt sind und wenigstens eine der Dichtungslagen (20, 30) in einem von äußeren Kräften freien Zustand in zur Faltachse (F) parallelen und zu den Dichtungslagen (20, 30) orthogonalen Axialebenen bis zu ihrem äußeren Umfangsrand konkav in Bezug auf die andere der Dichtungslagen (20, 30) vorgeformt, beispielsweise rund oder durch Ausbildung eines Knicks (26, 36) gewölbt ist, so dass Stirnflächen der Dichtungslagen (20, 30) in diesen Axialebenen in Richtung auf den äußeren Umfangsrand der jeweiligen Dichtungslage unter einem spitzen Winkel aufeinander zu laufen.

10. Sickendichtung nach einem der vorhergehenden Ansprüche, wobei die Dichtungslagen (20, 30) bei umgelegtem/n Faltabschnitt(en) (37) vor Herstellung des Halteeingriffs einander axial zugewandt sind und sich wenigstens eine der Dichtungslagen (20, 30) in einem von äußeren Kräften freien Zustand in einer zur Faltachse (F) orthogonalen Faltebene, die sich in axialer Draufsicht auf die gefaltete Sickendichtung (S) durch einen zentralen Bereich der Sickendichtung (S) und/oder durch das Halteelement (29; 51) erstreckt, von der Faltachse (F) aus gesehen konvex von der anderen der Dichtungslagen (20, 30) weg wölbt.

11. Sickendichtung nach einem der vorhergehenden Ansprüche, wobei die Dichtungslagen (20; 30) einschließlich Halteelement (29; 51) und Haltegegenelement (39; 55) über den einen oder die mehreren Faltabschnitte (37) zusammenhängend aus einem Metallblech durch Tiefziehen und Stanzen geformt sind.

12. Sickendichtung nach einem der vorhergehenden Ansprüche, wobei die erste Dichtungslage (20) eine Dichtungsschleife und die zweite Dichtungslage (30) eine Dichtungsschleife aufweisen, die Dichtungsschleife der ersten Dichtungslage (20) in axialer Draufsicht einen von Fluid durchströmbaren Innenbereich umgibt und eine Dichtungsstirnfläche für axialen Kontakt mit einem der Bauteile (1, 40) aufweist, die Dichtungsschleife der zweiten Dichtungslage (30) in der Draufsicht einen vom Fluid durchströmbaren Innenbereich umgibt und eine Dichtungsstirnfläche für axialen Kontakt mit dem anderen der Bauteile (1, 40) aufweist, diese Innenbereiche einander in der Draufsicht zumindest teilweise, bevorzugt gänzlich überlappen, und wobei die Dichtungsschleife der ersten Dichtungslage (20) eine Sickenschleife und/oder die Dichtungsschleife der zweiten Dichtungslage (30) eine Sickenschleife ist oder sind.

13. Sickendichtung nach Anspruch 12, wobei die erste Dichtungslage (20) eine Versteifungsstruktur (23, 24) umfasst, die sich in der Draufsicht von der Dichtungsschleife der ersten Dichtungslage (20) in den Innenbereich erstreckt, diesen Innenbereich vorzugsweise durchquert, um die Dichtungsschleife der ersten Dichtungslage (20) zu versteifen, und/oder wobei die zweite Dichtungslage (30) eine Versteifungsstruktur (33, 34) umfasst, die sich in der Draufsicht von der Dichtungsschleife der zweiten Dichtungslage (30) in den Innenbereich erstreckt, diesen Innenbereich vorzugsweise durchquert, um die Dichtungsschleife der zweiten Dichtungslage (30) zu versteifen.

14. Sickendichtung nach Anspruch 13, wobei wenigstens eine (24, 34) der Versteifungsstrukturen (23, 24, 33, 34) in Bezug auf die ihr axial zugewandte Versteifungsstruktur (34, 24) konvex ist und im gefalteten und gesicherten Zustand vorzugsweise an der axial zugewandten Versteifungsstruktur (34, 24) axial anliegt.

15. Pumpe zur Beaufschlagung eines Aggregats, beispielsweise eines Getriebes, mit Fluid, wobei die Pumpe Folgendes umfasst:
(a) ein Pumpengehäuse (1) mit
- einer Gehäuse-Umfangswand (2), die eine Förderkammer (5) der Pumpe umgibt,
- einer Gehäuse-Stirnwand (3) mit einer der Förderkammer (5) axial abgewandten äußeren Gehäuse-Stirnfläche (14),
- einem Einlass (6) für das Fluid und
- einem an der äußeren Gehäuse-Stirnfläche (14) mündenden Auslass (8) für das Fluid,
(b) ein in der Förderkammer (5) bewegliches Förderglied (10) zur Förderung des Fluids von einer den Einlass (6) umfassenden Niederdruckseite zu einer den Auslass (8) umfassenden Hochdruckseite der Pumpe, und
(c) die Sickendichtung (S) nach einem der vorhergehenden Ansprüche mit der ersten Dichtungslage (20) und der zweiten Dichtungslage (30), die axial übereinander, bevorzugt aufeinander, liegen,
(d) wobei die erste Dichtungslage (20) eine erste Dichtungsschleife und die zweite Dichtungslage (30) eine zweite Dichtungsschleife aufweisen, die erste Dichtungsschleife in axialer Draufsicht einen von Fluid durchströmbaren ersten Innenbereich und die zweite Dichtungsschleife in der Draufsicht einen vom Fluid durchströmbaren zweiten Innenbereich umgeben, und der erste Innenbereich und der zweite Innenbereich einander in der Draufsicht zumindest teilweise, bevorzugt gänzlich, überlappen,
(e) wobei die erste Dichtungsschleife eine erste Sickenschleife (21) mit einer Sickenstirnfläche für axialen Kontakt und/oder die zweite Dichtungsschleife eine zweite Sickenschleife (31) mit einer Sickenstirnfläche für axiale Kontakt ist oder sind, und
(f) wobei eine der Dichtungsschleifen zur Abdichtung des Auslasses (8) der äußeren Gehäuse-Stirnfläche (14) axial zugewandt ist und den Auslass (8) in der Draufsicht umgibt.

16. Pumpe nach Anspruch 15, wobei die Dichtungsschleifen jeweils Sickenschleifen sind und sich die erste Sickenschleife (21) und die zweite Sickenschleife (31) in Richtung auf den jeweils umgebenen Innenbereich axial voneinander weg spreizen, so dass zwischen den axial voneinander abgewandten Sickenstirnflächen ein verlängerter axialer Federweg erhalten wird.

17. Pumpe nach einem der Ansprüche 15 und 16, wobei
- die Pumpe an einer Aufnahmeeinrichtung (40) angeordnet ist,
- die Aufnahmeeinrichtung (40) einen Aufnahmeschacht mit einem Schachtboden (44) aufweist,
- wenigstens ein axialer Abschnitt des Pumpengehäuses (1) im Aufnahmeschacht angeordnet ist, so dass die äußere Gehäuse-Stirnfläche (14) dem Schachtboden unter Ausbildung eines axialen Spalts axial gegenüberliegt, und
- die Sickendichtung (S) den Auslass (8) im axialen Spalt abdichtet.

18. Pumpe nach einem der Ansprüche 15 bis 17, wobei die Sickendichtung (S) im montierten Zustand der Pumpe über die Dichtungsschleifen entweder in einem Kraftnebenschluss zu einer Federeinrichtung (15) oder in einem Krafthauptschluss eine axiale Federkraft auf das Pumpengehäuse (1) ausübt.

19. Pumpe nach einem Ansprüche 15 bis 18, wobei die erste Dichtungslage (20) eine erste Versteifungsstruktur (23) umfasst, die sich in der Draufsicht von der ersten Dichtungsschleife in den ersten Innenbereich erstreckt, den ersten Innenbereich vorzugsweise durchquert, um die erste Dichtungsschleife zu versteifen, und/oder wobei die zweite Dichtungslage (30) eine zweite Versteifungsstruktur (33) umfasst, die sich in der Draufsicht von der zweiten Dichtungsschleife in den zweiten Innenbereich erstreckt, den zweiten Innenbereich vorzugsweise durchquert, um die zweite Dichtungsschleife zu versteifen.

## Claims

1. A bead gasket for sealing off a gap between a first component (1) and a second component (40), the bead gasket (S) comprising:
(a) a first gasket layer (20) comprising a holding element (29; 51);
(b) a second gasket layer (30) comprising a complementary holding element (39; 55); and
(c) one or more folding portions (37) which connect(s) the first gasket layer (20) and the second gasket layer (30),
(d) wherein the first gasket layer (20), the second gasket layer (30) and the respective folding portion (37) are formed in one piece, and the gasket layers (20, 30) are or can be folded one onto the other by folding over the respective folding portion (37), such that they face each other in an axial direction, and
(e) wherein the holding element (29; 51) and the complementary holding element (39; 55) are in or can be moved into a holding engagement with each other based on a positive fit and/or frictional fit, in order to secure the gasket layers (20, 30) against diverging from each other,
**characterised in that**
(f) the gasket layers (20; 30) including the holding element (29; 51) and the complementary holding element (39; 55) are formed contiguously, via the one or more folding portions (37), from a sheet of metal.

2. The bead gasket according to the preceding claim, wherein the holding element (29; 51) and the complementary holding element (39; 55) engage behind each other in the holding engagement in relation to the axial direction and preferably press against each other in the axial direction with a tensioning force based on elastic deformation.

3. The bead gasket according to any one of the preceding claims, wherein the holding element (29) engages behind an outer circumferential edge of the second gasket layer (30), or the complementary holding element (39) engages behind an outer circumferential edge of the first gasket layer (20), in the holding engagement and with respect to the axial direction.

4. The bead gasket according to any one of the preceding claims, wherein the holding element (29; 51) and/or the complementary holding element (39; 55) protrude(s) freely from a root end in the plan view and can be elastically bent out of the holding engagement.

5. The bead gasket according to any one of the preceding claims, wherein the holding element (51) and/or the complementary holding element (39'; 55) is/are bent roundedly towards a free end and bent back again or preferably crimped and extends or each extend out of a plane of the associated gasket layer (20, 30) into a plane of the other gasket layer (30, 20) in order to keep the thickness of the bead gasket (S) low in the region of the holding engagement.

6. The bead gasket according to any one of the preceding claims, wherein: in an axial plan view onto the unfolded bead gasket (S), a folding axis (F) of the bead gasket (S) extends in the one or more folding portions (37) transversely with respect to the axial direction; in the plan view along the folding axis (F), the respective folding portion (37) exhibits a folding portion breadth and the bead gasket (S) exhibits a maximum gasket breadth as measured parallel to the folding axis (F); and said maximum gasket breadth is at least three times or at least five times as large as the respective folding portion breadth.

7. The bead gasket according to any one of the preceding claims, comprising a first folding portion (37) and a second folding portion (37), wherein in an axial plan view onto the unfolded bead gasket (S), a folding axis (F) of the bead gasket (S) extends in the folding portions (37) and in a cavity (27) located between the folding portions (37) which is completely, or only in regions along the folding axis (F), free of material.

8. The bead gasket according to any one of the preceding claims, wherein the respective folding portion (37) extends completely in a first sector in an axial plan view onto the folded bead gasket (S), and the holding engagement is formed in a second sector in the plan view, wherein these sectors are delineated by two straight lines which intersect in the plan view and which are mirror images of each other across the point of intersection of the straight lines and extend over a sector angle of at most 90° or at most 60°.

9. The bead gasket according to any one of the preceding claims, wherein the gasket layers (20, 30) axially face each other when the folding portion(s) (37) has/have been folded over and before the holding engagement has been established, and at least one of the gasket layers (20, 30) is pre-moulded, for example rounded or curved by forming an inflection (26, 36), in axial planes which are parallel to the folding axis (F) and orthogonal with respect to the gasket layers (20, 30), up to its outer circumferential edge and concavely with respect to the other of the gasket layers (20, 30) when it is free of external forces, such that end-facing surfaces of the gasket layers (20, 30) taper towards each other at an acute angle towards the outer circumferential edge of the respective gasket layer in these axial planes.

10. The bead gasket according to any one of the preceding claims, wherein the gasket layers (20, 30) axially face each other when the folding portion(s) (37) has/have been folded over and before the holding engagement has been established, and at least one of the gasket layers (20, 30) is curved in a folding plane, which is orthogonal with respect to the folding axis (F) and extends through a central region of the bead gasket (S) and/or through the holding element (29; 51) in an axial plan view onto the folded bead gasket (S), convexly away from the other of the gasket layers (20, 30) as viewed from the folding axis (F), when it is free of external forces.

11. The bead gasket according to any one of the preceding claims, wherein the gasket layers (20; 30) including the holding element (29; 51) and the complementary holding element (39; 55) are formed contiguously, via the one or more folding portions (37), from a sheet of metal by deep-drawing and punching.

12. The bead gasket according to any one of the preceding claims, wherein: the first gasket layer (20) comprises a gasket loop, and the second gasket layer (30) comprises a gasket loop; the gasket loop of the first gasket layer (20) surrounds an inner region through which fluid can flow in an axial plan view and comprises a gasket end-facing surface for an axial contact with one of the components (1, 40); the gasket loop of the second gasket layer (30) surrounds an inner region through which fluid can flow in an axial plan view and comprises a gasket end-facing surface for an axial contact with the other of the components (1, 40); said inner regions overlap each other at least partially and preferably completely in the plan view; and the gasket loop of the first gasket layer (20) and/or the gasket loop of the second gasket layer (30) is/are a bead loop.

13. The bead gasket according to claim 12, wherein the first gasket layer (20) comprises a rigidifying structure (23, 24) which in the plan view extends from the gasket loop of the first gasket layer (20) into the inner region and preferably traverses this inner region, in order to rigidify the gasket loop of the first gasket layer (20), and/or wherein the second gasket layer (30) comprises a rigidifying structure (33, 34) which in the plan view extends from the gasket loop of the second gasket layer (30) into the inner region and preferably traverses this inner region, in order to rigidify the gasket loop of the second gasket layer (30).

14. The bead gasket according to the preceding claim, wherein at least one (24, 34) of the rigidifying structures (23, 24, 33, 34) is convex with respect to the rigidifying structure (34, 24) axially facing it and preferably axially abuts the axially facing rigidifying structure (34, 24) when folded and secured.

15. A pump for applying fluid to a unit, for example a gearbox, the pump comprising:
(a) a pump housing (1) featuring
- a housing circumferential wall (2) which surrounds a delivery chamber (5) of the pump,
- a housing end-facing wall (3) exhibiting an outer housing end-facing surface (14) facing axially away from the delivery chamber (5),
- an inlet (6) for the fluid and
- an outlet (8) for the fluid which emerges on the outer housing end-facing surface (14);
(b) a delivery member (10) which can be moved within the delivery chamber (5) in order to deliver the fluid from a low-pressure side of the pump comprising the inlet (6) to a high-pressure side of the pump comprising the outlet (8); and
(c) the bead gasket (S) according to any one of the preceding claims, comprising the first gasket layer (20) and the second gasket layer (30) which lie axially one above the other, preferably one on top of the other,
(d) wherein: the first gasket layer (20) comprises a first gasket loop, and the second gasket layer (30) comprises a second gasket loop; the first gasket loop surrounds a first inner region through which fluid can flow in an axial plan view, and the second gasket loop surrounds a second inner region through which the fluid can flow in the plan view; and the first inner region and the second inner region overlap each other at least partially and preferably completely in the plan view;
(e) wherein the first gasket loop is a first bead loop (21) comprising a gasket end-facing surface for an axial contact and/or the second gasket loop is a second bead loop (31) comprising a gasket end-facing surface for an axial contact, and
(f) wherein one of the gasket loops axially faces the outer housing end-facing surface (14) and surrounds the outlet (8) in the plan view in order to seal off the outlet (8).

16. The pump according to claim 15, wherein the gasket loops are each bead loops, and the first bead loop (21) and the second bead loop (31) axially splay away from each other towards the respectively surrounded inner region, such that an increased axial spring displacement is obtained between the bead end-facing surfaces which face axially away from each other.

17. The pump according to any one of claims 15 and 16, wherein:
- the pump is arranged on an accommodating device (40);
- the accommodating device (40) comprises an accommodating well featuring a base (44) of the well;
- at least one axial portion of the pump housing (1) is arranged in the accommodating well, such that the outer housing end-facing surface (14) lies axially opposite the base of the well, forming an axial gap; and
- the bead gasket (S) seals off the outlet (8) in the axial gap.

18. The pump according to any one of claims 15 to 17, wherein when the pump is assembled, the bead gasket (S) exerts an axial spring force on the pump housing (1) via the gasket loops either in an indirect line of force to a spring device (15) or in a direct line of force.

19. The pump according to any one of claims 15 to 18, wherein the first gasket layer (20) comprises a first rigidifying structure (23) which in the plan view extends from the first gasket loop into the first inner region and preferably traverses the first inner region in order to rigidify the first gasket loop, and/or wherein the second gasket layer (30) comprises a second rigidifying structure (33) which in the plan view extends from the second gasket loop into the second inner region and preferably traverses the second inner region in order to rigidify the second gasket loop.

## Revendications

1. Joint d'étanchéité à nervure pour étancher une fente entre un premier composant (1) et un second composant (40), le joint d'étanchéité à nervure (S) comprenant :
(a) une première couche de joint d'étanchéité (20) comportant un élément de maintien (29 ; 51) ;
(b) une seconde couche de joint d'étanchéité (30) comportant un élément de maintien complémentaire (39 ; 55) ; et
(c) une ou plusieurs parties de pliage (37) reliant la première couche de joint d'étanchéité (20) et la seconde couche de joint d'étanchéité (30),
(d) la première couche de joint d'étanchéité (20), la seconde couche de joint d'étanchéité (30) et la partie de pliage respective (37) étant formées d'une seule pièce, les couches de joint d'étanchéité (20, 30) étant ou pouvant être pliées l'une sur l'autre, en repliant la partie de pliage respective (37), de sorte qu'elles se fassent face en direction axiale, et
(e) l'élément de maintien (29 ; 51) et l'élément de maintien complémentaire (39 ; 55) étant ou pouvant être amenés en engagement de maintien par formes complémentaires et / ou par friction afin de fixer les couches de joint d'étanchéité (20, 30) contre tout écartement,
**caractérisé en ce que**
(f) les couches de joint d'étanchéité (20 ; 30), y compris l'élément de maintien (29 ; 51) et l'élément de maintien complémentaire (39 ; 55), sont formées en tôle métallique de manière cohérente par l'intermédiaire de ladite une ou desdites plusieurs parties de pliage (37).

2. Joint d'étanchéité à nervure selon la revendication précédente, dans lequel l'élément de maintien (29 ; 51) et l'élément de maintien complémentaire (39 ; 55) s'engagent l'un derrière l'autre en engagement de maintien par rapport à la direction axiale et se pressent de préférence l'un contre l'autre en direction axiale avec une force de serrage par déformation élastique.

3. Joint d'étanchéité à nervure selon l'une quelconque des revendications précédentes, dans lequel l'élément de maintien (29) s'engage derrière un bord circonférentiel extérieur de la seconde couche de joint d'étanchéité (30) ou l'élément de maintien complémentaire (39) s'engage derrière un bord circonférentiel extérieur de la première couche de joint d'étanchéité (20) en engagement de maintien par rapport à la direction axiale.

4. Joint d'étanchéité à nervure selon l'une quelconque des revendications précédentes, dans lequel l'élément de maintien (29 ; 51) et / ou l'élément de maintien complémentaire (39 ; 55) font saillie librement à partir d'une extrémité de base en vue de dessus et peuvent se courber élastiquement hors de l'engagement de maintien.

5. Joint d'étanchéité à nervure selon l'une quelconque des revendications précédentes, dans lequel l'élément de maintien (51) et / ou l'élément de maintien complémentaire (39'; 55) sont déviés en arrondi vers une extrémité libre et recourbés à nouveau ou de préférence coudés et s'étendent depuis un plan de la couche de joint d'étanchéité associée (20, 30) vers un plan de l'autre couche de joint d'étanchéité (30, 20) afin de maintenir l'épaisseur du joint d'étanchéité à nervure (S) dans la zone de l'engagement de maintien.

6. Joint d'étanchéité à nervure selon l'une quelconque des revendications précédentes, dans lequel un axe de pliage (F) du joint d'étanchéité à nervure (S) s'étend transversalement à la direction axiale en vue de dessus axial sur le joint d'étanchéité à nervure (S) déplié dans ladite une ou lesdites plusieurs parties de pliage (37), la partie de pliage respective (37) présentant une largeur de partie de pliage en vue de dessus le long de l'axe de pliage (F), le joint d'étanchéité à nervure (S) présentant une largeur de joint d'étanchéité maximale mesurée parallèlement à l'axe de pliage (F), cette largeur de joint d'étanchéité maximale étant au moins trois fois ou au moins cinq fois plus grande que la largeur de partie de pliage respective.

7. Joint d'étanchéité à nervure selon l'une quelconque des revendications précédentes comprenant une première partie de pliage (37) et une seconde partie de pliage (37), un axe de pliage (F) du joint d'étanchéité à nervure (S) s'étendant en vue de dessus axial sur le joint d'étanchéité à nervure (S) déplié dans les parties de pliage (37) et dans un évidement (27) situé entre les parties de pliage (37) et entièrement ou seulement par endroits exempt de matériau le long de l'axe de pliage (F).

8. Joint d'étanchéité à nervure selon l'une quelconque des revendications précédentes, dans lequel la partie de pliage respective (37) s'étend complètement dans un premier secteur en vue de dessus axial sur le joint d'étanchéité à nervure (S) plié et l'engagement de maintien est formé dans un second secteur en vue de dessus, ces secteurs étant délimités par deux lignes droites se croisant en vue de dessus, ces secteurs étant opposés l'un à l'autre en image miroir par rapport à l'intersection des lignes droites, chacun secteur s'étendant sur un angle de secteur d'au plus 90° ou d'au plus 60°.

9. Joint d'étanchéité à nervure selon l'une quelconque des revendications précédentes, dans lequel les couches de joint d'étanchéité (20, 30) se font face axialement lorsque la ou les parties de pliage (37) sont repliées avant l'établissement de l'engagement de maintien, au moins une des couches de joint d'étanchéité (20, 30) étant préformée en état exempt de forces extérieures dans des plans axiaux parallèles à l'axe de pliage (F) et orthogonaux aux couches de joint d'étanchéité (20, 30) jusqu'à son bord circonférentiel extérieur en forme concave par rapport à l'autre des couches de joint d'étanchéité (20, 30), par exemple incurvée en arrondi ou en formant un coude (26, 36), de sorte que des surfaces frontales des couches de joint d'étanchéité (20, 30) dans ces plans axiaux se rapprochent à un angle aigu vers le bord circonférentiel extérieur de la couche de joint d'étanchéité respective.

10. Joint d'étanchéité à nervure selon l'une quelconque des revendications précédentes, dans lequel les couches de joint d'étanchéité (20, 30) se font face axialement lorsque la ou les parties de pliage (37) sont repliées avant l'établissement de l'engagement de maintien, au moins une des couches de joint d'étanchéité (20, 30) vue à partir de l'axe de pliage (F) étant incurvée en forme convexe à l'écart de l'autre des couches de joint d'étanchéité (20, 30) en état exempt de forces extérieures dans un plan de pliage orthogonal à l'axe de pliage (F) et s'étendant en vue de dessus axial sur le joint d'étanchéité à nervure (S) plié à travers une zone centrale du joint d'étanchéité à nervure (S) et / ou à travers l'élément de maintien (29 ; 51).

11. Joint d'étanchéité à nervure selon l'une quelconque des revendications précédentes, dans lequel les couches de joint d'étanchéité (20 ; 30), y compris l'élément de maintien (29 ; 51) et l'élément de maintien complémentaire (39 ; 55), sont formées en tôle métallique de manière cohérente par l'intermédiaire de ladite une ou desdites plusieurs parties de pliage (37) par emboutissage et estampage.

12. Joint d'étanchéité à nervure selon l'une quelconque des revendications précédentes, dans lequel la première couche de joint d'étanchéité (20) présente une boucle de joint d'étanchéité et la seconde couche de joint d'étanchéité (30) présente une boucle de joint d'étanchéité, la boucle de joint d'étanchéité de la première couche de joint d'étanchéité (20) entourant en vue de dessus axial une zone intérieure, à travers laquelle du fluide peut circuler, et présentant une surface frontale de joint d'étanchéité pour le contact axial avec l'un des composants (1, 40), la boucle de joint d'étanchéité de la seconde couche de joint d'étanchéité (30) entourant en vue de dessus une zone intérieure, à travers laquelle le fluide peut circuler, et présentant une surface frontale de joint d'étanchéité pour le contact axial avec l'autre des composants (1, 40), ces zones intérieures se chevauchant au moins partiellement, de préférence entièrement, en vue de dessus, et la boucle de joint d'étanchéité de la première couche de joint d'étanchéité (20) étant une boucle à nervure et / ou la boucle de joint d'étanchéité de la seconde couche de joint d'étanchéité (30) étant une boucle à nervure.

13. Joint d'étanchéité à nervure selon la revendication 12, dans lequel la première couche de joint d'étanchéité (20) comprend une structure de raidissement (23, 24) s'étendant en vue de dessus depuis la boucle de joint d'étanchéité de la première couche de joint d'étanchéité (20) vers et dans la zone intérieure et traversant de préférence cette zone intérieure afin de raidir la boucle de joint d'étanchéité de la première couche de joint d'étanchéité (20), et / ou dans lequel la seconde couche de joint d'étanchéité (30) comprend une structure de raidissement (33, 34) s'étendant en vue de dessus depuis la boucle de joint d'étanchéité de la seconde couche de joint d'étanchéité (30) vers et dans la zone intérieure et traversant de préférence cette zone intérieure afin de raidir la boucle de joint d'étanchéité de la seconde couche de joint d'étanchéité (30).

14. Joint d'étanchéité à nervure selon la revendication 13, dans lequel au moins une (24, 34) des structures de raidissement (23, 24, 33, 34) est convexe par rapport à la structure de raidissement (34, 24) qui lui fait face axialement et repose en état plié et fixé de préférence axialement contre la structure de raidissement (34, 24) faisant face axialement.

15. Pompe pour appliquer du fluide à un ensemble, par exemple une transmission, la pompe comprenant :
(a) un boîtier de pompe (1) comportant
- une paroi circonférentielle de boîtier (2) entourant une chambre de refoulement (5),
- une paroi frontale de boîtier (3) comportant une surface frontale de boîtier extérieure (14) opposée axialement à la chambre de refoulement (5),
- une entrée (6) pour le fluide et
- une sortie (8), débouchant sur la surface frontale de boîtier extérieure (14), pour le fluide ;
(b) un organe de refoulement (10) mobile dans la chambre de refoulement (5) pour refouler le fluide depuis un côté basse pression de la pompe comprenant l'entrée (6) vers un côté haute pression de la pompe comprenant la sortie (8) ; et
(c) le joint d'étanchéité à nervure (S) selon l'une quelconque des revendications précédentes comportant la première couche de joint d'étanchéité (20) et la seconde couche de joint d'étanchéité (30) qui se situent axialement l'une au-dessus de l'autre, de préférence l'une sur l'autre,
(d) la première couche de joint d'étanchéité (20) présentant une première boucle de joint d'étanchéité et la seconde couche de joint d'étanchéité (30) présentant une seconde boucle de joint d'étanchéité, la première boucle de joint d'étanchéité entourant en vue de dessus axial une première zone intérieure, à travers laquelle du fluide peut circuler, la seconde boucle de joint d'étanchéité entourant en vue de dessus une seconde zone intérieure, à travers laquelle le fluide peut circuler, et la première zone intérieure et la seconde zone intérieure se chevauchant au moins partiellement, de préférence entièrement, en vue de dessus,
(e) la première boucle de joint d'étanchéité étant une première boucle à nervure (21) présentant une surface frontale à nervure pour le contact axial et / ou la seconde boucle de joint d'étanchéité étant une seconde boucle à nervure (31) présentant une surface frontale à nervure pour le contact axial, et
(f) l'une des boucles de joint d'étanchéité pour étancher la sortie (8) faisant face axialement à la surface frontale de boîtier extérieure (14) et entourant la sortie (8) en vue de dessus.

16. Pompe selon la revendication 15, dans laquelle les boucles de joint d'étanchéité sont chacune des boucles à nervure, et la première boucle à nervure (21) et la seconde boucle à nervure (31) s'écartent axialement l'une de l'autre vers la zone intérieure respectivement entourée, de sorte qu'une déflexion de ressort axiale étendue est obtenu entre les surfaces frontales à nervure opposées axialement l'une à l'autre.

17. Pompe selon l'une quelconque des revendications 15 et 16, dans laquelle
- la pompe est disposée sur un dispositif de réception (40),
- le dispositif de réception (40) présente un puits de réception présentant une base de puits (44),
- au moins une partie axiale du boîtier de pompe (1) est disposée dans le puits de réception, de sorte que la surface frontale de boîtier extérieure (14) soit axialement opposée à la base de puits, en formant une fente axiale, et
- le joint d'étanchéité à nervure (S) étanche la sortie (8) dans la fente axiale.

18. Pompe selon l'une quelconque des revendications 15 à 17, dans laquelle lorsque la pompe est assemblée, le joint d'étanchéité à nervure (S) exerce une force de ressort axiale sur le boîtier de pompe (1) par l'intermédiaire des boucles de joint d'étanchéité soit par complémentarité de force secondaire vers un dispositif à ressort (15), soit par complémentarité de force principale.

19. Pompe selon l'une quelconque des revendications 15 à 18, dans laquelle la première couche de joint d'étanchéité (20) comprend une première structure de raidissement (23) s'étendant en vue de dessus depuis la première boucle de joint d'étanchéité vers et dans la première zone intérieure et traversant de préférence la première zone intérieure afin de raidir la première boucle de joint d'étanchéité et / ou la seconde couche de joint d'étanchéité (30) comprend une seconde structure de raidissement (33) s'étendant en vue de dessus depuis la seconde boucle de joint d'étanchéité vers et dans la seconde zone intérieure et traversant de préférence la seconde zone intérieure afin de raidir la seconde boucle de joint d'étanchéité.
